# EUROPEAN PATENT SPECIFICATION

(11) **EP 2 147 851 B1**
(45) Date of publication and mention of the grant of the patent: **05.03.2014**
(21) Application number: 09009561.3
(22) Date of filing: 23.07.2009
(51) Int. Cl.: B62J 37/00, F02D 9/10, F02M 23/12, F02M 35/10, F02M 35/16, F02M 69/04, F02M 69/32

(54) **Motorcycle**
Motorrad
Motocyclette

(30) Priority: 24.07.2008 JP 2008190450; 25.02.2009 JP 2009042957; 25.02.2009 JP 2009042971; 08.05.2009 JP 2009114020
(43) Date of publication of application: 27.01.2010
(73) Proprietor: Yamaha Hatsudoki Kabushiki Kaisha, Iwata-shi, Shizuoka 438-8501 (JP)
(72) Inventor: Matsubara, Toshio, Iwata-shi Shizuoka-ken 438-8501 (JP); Atsumi, Tomoyasu, Iwata-shi Shizuoka-ken 438-8501 (JP); Gouke, Takayuki, Iwata-shi Shizuoka-ken 438-8501 (JP); Ishizuka, Yasushi, Iwata-shi Shizuoka-ken 438-8501 (JP); Morita, Kyouji, Iwata-shi Shizuoka-ken 438-8501 (JP); Nagai, Yoshitaka, Iwata-shi Shizuoka-ken 438-8501 (JP); Ishii, Wataru, Iwata-shi Shizuoka-ken 438-8501 (JP); Tsuzuku, Hiroyuki, Iwata-shi Shizuoka-ken 438-8501 (JP)
(74) Representative: Zimmermann, Tankred Klaus

(56) References cited:
- EP-A1- 1 555 431
- EP-A2- 1 186 526
- EP-A2- 1 992 812
- JP-A- 2007 062 612

## Description

### BACKGROUND OF THE INVENTION

### 1. Field of the Invention

The present invention relates to a motorcycle of a unit-swing type.

### 2. Description of the Related Art

As disclosed in patent document 1 (Japanese Patent No. 4084484) and patent document 2 (WO2004/38213A), some motorcycles include a unit-swing engine. A support structure for supporting the unit-swing engine (swing type engine unit) is designed to pivot the engine, a rear wheel and a transmission gear mechanism (which transmits the driving force of the engine to the rear wheel) together about a pivot shaft.

In such a motorcycle including the unit-swing engine, a throttle body and a link mechanism for driving throttle valves are pivotable together with the engine about the pivot shaft vertically with respect to a vehicle body frame. Therefore, a space is required for permitting the vertical pivoting of the throttle body and the link mechanism with respect to the vehicle body frame, making it particularly difficult to increase the volume of a storage box.

A motorcycle disclosed in patent document 1 includes a storage box disposed below a seat, an engine disposed below the storage box, and a pivot located at an upper front portion of a crank case of the engine.

In this motorcycle, the pivot is spaced a short distance from a cylinder head disposed in a forward direction with respect to the crank case, so that the cylinder head is vertically movable only a short distance. This effectively prevents a front portion of the engine from interfering with other peripheral components.

A motorcycle disclosed in patent document 2 includes a storage box disposed below a seat, an engine disposed below the storage box and supported pivotally about a pivot axis located above the engine, a main passage, a throttle body, and an auxiliary passage.

Intake air is supplied into the engine through the main passage. The throttle body is disposed vertically in the midst of the main passage. Two throttle valves for opening/closing operations are accommodated in the throttle body. The auxiliary passage connects a space defined between the two throttle valves to a space adjacent to an injection port of an injector attached to a cylinder head of the engine.

The intake air is supplied from the main passage to the auxiliary passage during a lower load driving operation. The intake air having passed through the auxiliary passage is applied to fuel injected from the injector to promote disintegration of the fuel. This increases the fuel combustion efficiency.

The injector is at least partly accommodated in the cylinder head. This arrangement reduces a space occupied by the injector as compared with a case in which the injector is provided in an air intake pipe. This increases the size of a space below the seat, making it possible to increase the volume of the storage box to be provided below the seat.

A link mechanism is provided in the vicinity of the throttle body. The link mechanism links the opening/closing operations of the two throttle valves.

The throttle body of the motorcycle disclosed in patent document 2 includes the two throttle valves and, therefore, has a greater size than the throttle body of the motorcycle disclosed in patent document 1.

Therefore, a pivot shaft is disposed above the engine like in the motorcycle disclosed in patent document 1.

The partial accommodation of the injector in the cylinder head is advantageous for size reduction of an engine unit. However, the size of the throttle body is increased, because the auxiliary passage is branched from the main passage between the two throttle valves. Consequently, this increases the size of the engine unit.

The size increase of the engine unit reduces a storage box accommodation space, thereby reducing the volume of the storage box.

The pivot shaft is disposed above the engine in the vicinity of the storage box. Therefore, the storage box should be located away from the pivot shaft, making it difficult to increase the volume of the storage box. In addition, the throttle body accommodating the two throttle valves and hence having a greater size is disposed in an attitude such that the two throttle valves are arranged vertically. This makes it difficult to increase the height of the storage box, thereby making it more difficult to increase the volume of the storage box.

It is also possible to dispose the greater size throttle body in an attitude such that the two throttle valves are arranged in tandem in a direction between the front and the rear. In this case, however, it is possible that an upper portion of the engine unit has a greater size depending on a positional relationship between the throttle body and a suspension device.

Of course, the seating surface of the seat should be set at a proper height level. Therefore, it is impractical to increase the volume of the storage box by locating the seat at a higher position.

Document JP 2007062612 A discloses a motorcycle according to the preamble of claim 1.

EP 1 555 431 A1 discloses a two-wheeled motor vehicle having an engine equipped with a throttle body including two throttle valves spaced from each other in the intake air flow direction of an intake air pipe. The axis of the cylinder of the engine is inclined by a predetermined angle above the horizontal line. The exhaust valve of the engine is arranged at a further angle of inclination relative to the axis of the engine. The injector of the engine is arranged in a further inclined angular relationship relative to the exhaust valve. A center axis of the intake port extending between both axis of rotation of both throttle valves is arranged generally orthogonal to the axis defined by the cylinder bore of the engine.

### SUMMARY OF THE INVENTION

It is therefore an object of the present invention to provide a motorcycle which includes an engine having higher fuel combustion efficiency and a storage box having a greater volume, and is substantially free from size increase.

This object is achieved by a motorcycle of claim 1.

In the inventive motorcycle, the engine has higher fuel combustion efficiency, and the storage box has a greater volume. In addition, the motorcycle is substantially free from size increase.

### BRIEF DESCRIPTION OF THE DRAWINGS

Fig. 1 is a right side view of a motorcycle according to a first embodiment of the present invention.

Fig. 2 is a partially enlarged right side view of major portions of the motorcycle of Fig. 1.

Fig. 3 is a partially sectional view of an engine unit as seen in plan.

Fig. 4 is a vertical sectional view of major portions of the engine unit as seen from the right side.

Fig. 5 is a partly broken right side view of the engine unit.

Fig. 6 is a schematic right side view illustrating, partly in section, major portions around a throttle body.

Fig. 7 is a graph showing relationships between the degree (angle) of opening of a first throttle valve and the degree of opening of a second throttle valve.

Fig. 8 is a schematic right side view illustrating the throttle body with its first and second throttle valves being fully open.

Fig. 9 is a schematic left side view of major portions of the motorcycle.

Fig. 10 is a perspective view of a connection mechanism and its peripheral portion.

Fig. 11 is a left side view illustrating major portions shown in Fig. 10.

Fig. 12 is a sectional view taken along a line XII-XII in Fig. 11.

Fig. 13 is a perspective view illustrating connection portions and their peripheral portions.

Fig. 14 is an enlarged side view illustrating major portions around an upper portion of the engine unit.

Figs. 15(A) and 15(B) are schematic left side views illustrating major portions of the motorcycle of the first embodiment, and major portions of a motorcycle of a comparative example.

Figs. 16(A) and 16(B) are schematic left side views illustrating the major portions of the motorcycle of the first embodiment, and the major portions of the motorcycle of the comparative example.

Fig. 17 is a schematic left side view illustrating the major portions of the motorcycle of the first embodiment, and the major portions of the motorcycle of the comparative example.

Fig. 18 is a right side view illustrating, partly in section, a motorcycle according to a second embodiment.

Figs. 19(A) and 19(B) are right side views illustrating, partly in section, major portions of a motorcycle according to a third embodiment.

### DETAILED DESCRIPTION OF PREFERRED EMBODIMENTS

### First Embodiment

A first embodiment of the present invention will hereinafter be described with reference to the attached drawings. In the following description, directions between the front and the rear, vertical directions and lateral (transverse) directions are defined on the basis of a reference posture of a motorcycle which travels straight ahead on a horizontal plane as seen from a viewpoint of a forward-facing rider of the motorcycle.

In the drawings, a forward direction of the motorcycle is indicated by an arrow F. Similarly, a rearward direction of the motorcycle is indicated by an arrow B. Further, an upward direction of the motorcycle is indicated by an arrow U, and a downward direction of the motorcycle is indicated by an arrow D. A leftward direction of the motorcycle is indicated by an arrow L, and a rightward direction of the motorcycle is indicated by an arrow R.

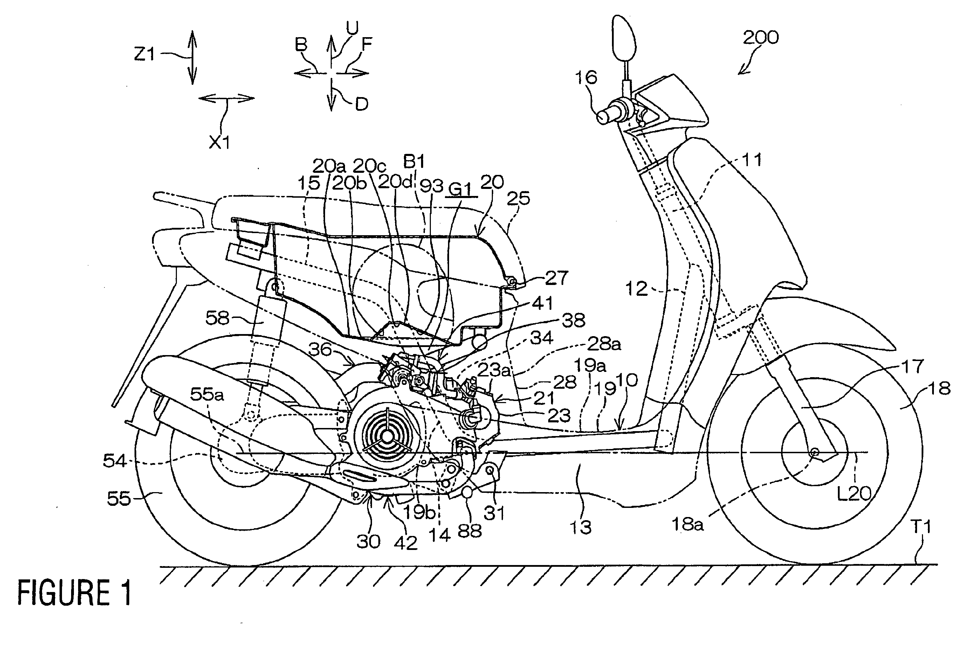

Fig. 1 is a right side view of a motorcycle 200 according to the first embodiment of the present invention. In Fig. 1, the motorcycle 200 is illustrated partly in a broken form. In the drawings, phantom lines are shown by two-dot-and-dash-lines, and hidden outlines are shown by broken lines.

In this embodiment, the motorcycle 200 is a scooter. In this embodiment, the scooter will be described as an example of the inventive motorcycle, but not by way of limitation. The present invention is applicable to other types of motorcycles such as so-called mopeds in which a unit-swing engine is mounted and a storage box is provided below a seat.

The motorcycle 200 includes a vehicle body frame 10. The vehicle body frame 10 extends in the direction (X1) between the front and the rear of the vehicle as a whole. The vehicle body frame 10 includes a head frame 11, and a main frame 12 extending obliquely in a direction downward and rearward from the head frame 11. The vehicle body frame 10 further includes a pair of right and left side frames 13 generally extending horizontally in a rearward direction from a lower end of the main frame 12, and a pair of right and left rear frames 14 respectively extending obliquely in a direction upward and rearward from rear ends of the side frames 13. The vehicle body frame 10 further includes a pair of right and left seat frames 15 respectively extending generally horizontally in a rearward direction from rear ends of the rear frames 14. In Fig. 1, only right ones of the side frames 13, the rear frames 14 and the seat frames 15 are shown.

A steering shaft 17 extends in a downward direction from a handlebar 16 through the head frame 11. A front wheel 18 is attached to a lower end of the steering shaft 17. Thus, the front wheel 18 is supported by the vehicle body frame 10 via the steering shaft 17. A foot rest plate 19 is attached to the right and left side frames 13. The right and left side plates 13 serve as a foot rest plate support. The rider sits on a seat 25 to be described later, and rests his or her feet on the foot rest plate 19. Therefore, the foot rest plate 19 is disposed in a forward direction with respect to the seat 25.

With the motorcycle 200 seen from a lateral side, a first phantom line L20 is defined as extending through center axes 18a, 55a of the front wheel 18 and a rear wheel 55 supported by the vehicle body frame 10. The first phantom line L20 is, for example, parallel to a horizontal ground surface T1. With the motorcycle 200 seen from the lateral side, an axis parallel to the first phantom line L20 is defined as a vehicle axis X1 in the direction between the front and the rear (extending in a first direction). With the motorcycle 200 seen from the lateral side, an axis perpendicular to the vehicle axis X1 in the direction between the front and the rear is defined as a vehicle vertical axis Z1 (extending in a second direction).

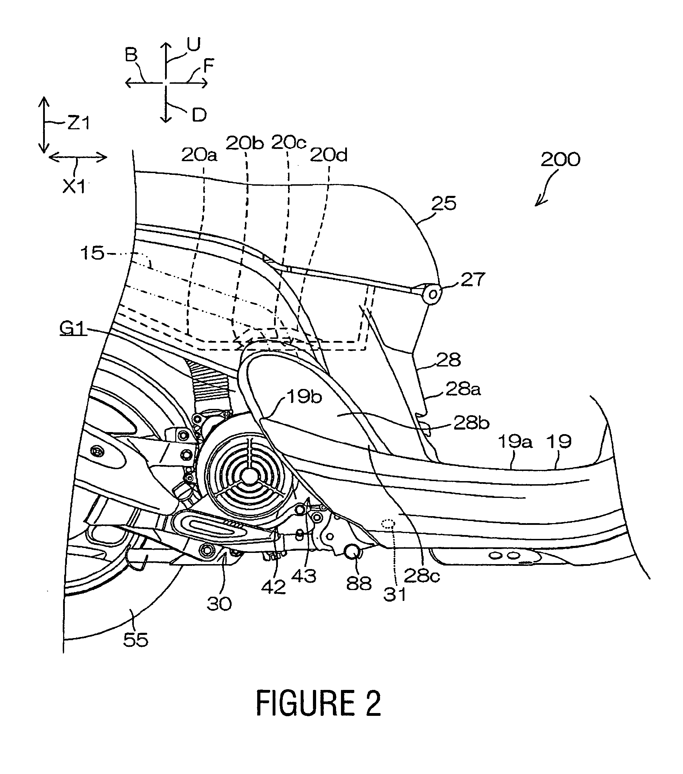

As shown in a partially enlarged right side view of Fig. 2, the foot rest plate 19 extends in the direction (X1) between the front and the rear of the vehicle. The foot rest plate 19 is gently curved in the direction (X1) between the front and the rear of the vehicle. More specifically, the foot rest plate 19 is curved in an upward direction from an intermediate portion 19a toward rear ends 19b thereof.

Referring to Fig. 1, a storage box 20 is fixed to the rear frames 14 and the seat frames 15. A helmet B1 or the like is stored in the storage box 20. The storage box 20 is disposed between the right and left seat frames 15 transversely (Y1) to the vehicle. The storage box 20 has an open-top box shape. The storage box 20 includes a bottom plate 20a having a lower surface 20d formed with a recess 20c. The recess 20c is formed by recessing, in an upward direction, a part of the lower surface 20b of the bottom plate 20a of the storage box 20. The recess 20c is provided in a region 93 of the bottom plate 20a of the storage box 20 opposed to an uppermost portion of an engine unit 30 (to be described later) vertically (Z1) with respect to the vehicle.

With the provision of the recess 20c in the lower surface 20b of the bottom plate 20a, a projection 20d is provided on an upper surface of the bottom plate 20a. The projection 20d projects in an upward direction to the inside of the storage box 20. The projection 20d is present generally at the center of the bottom plate 20a. With the helmet B1 placed over the projection 20d, the projection 20d is inserted in a dead space inside the helmet B1. Thus, the storage box 20 is conveniently used despite of the provision of the recess 20c.

The seat 25 is fixed to the seat frames 15. The seat 25 extends from an intermediate portion to a rear end of the vehicle body frame 10 in the direction (X1) between the front and the rear of the vehicle. The storage box 20 is disposed below the seat 25. The seat 25 also serves as a lid which covers and uncovers a top opening of the storage box 20.

More specifically, a front end portion of the seat 25 is attached to a vehicle body cover 28 (to be described later) via a hinge 27. The seat 25 is pivoted about the hinge 27 in one of opposite directions, whereby a rear portion of the seat 25 is lifted. Thus, the top opening of the storage box 20 is uncovered. Further, the seat 25 is pivoted about the hinge 27 in the other direction to be thereby moved back into a state in which the rider can sit on the seat 25. Thus, the top opening of the storage box 20 is covered.

A lower space G1 is defined below the seat 25. The storage box 20 is disposed in the lower space G1.

The vehicle body cover 28 is attached to the rear frames 14. The vehicle body cover 28 extends in an upright direction from a rear portion of the foot rest plate 19. The vehicle body cover 28 partly surrounds the lower space G1 below the seat 25. The vehicle body cover 28 covers almost all of the storage box 20 and a front portion of the engine unit 30 (to be described later) from a front side and lateral sides.

As shown in Fig. 2, the vehicle body cover 28 includes a front wall 28a disposed below the front end of the seat 25, and a pair of side walls 28b disposed below right and left ends of the seat 25. In Fig. 2, only the right one of the side walls 28b is shown. The side walls 28b are laterally symmetrical. Front portions 28c of the side walls 28b overlap the foot rest plate 19 in the direction (X1) between the front and the rear of the vehicle. The front portions 28c of the side walls 28b are held between the rear ends 19b of the foot rest plate 19 transversely (Y1) to the vehicle.

The engine unit 30, which is of a unit-swing type, is mounted on the vehicle body frame 10. The engine unit 30 is pivotable about a pivot shaft 31 with respect to the vehicle body frame 10.

The engine unit 30 is a forced-air-cooled engine unit. A part of the engine unit 30 is covered with the vehicle body cover 28. More specifically, a front end portion of an engine body 21 and a front end portion of a shroud 42 of the engine unit 30 to be described later are covered with the vehicle body cover 28. The engine unit 30 is disposed below the seat 25 and the storage box 20.

As best shown in Fig. 1, the engine unit 30 includes the engine body 21, an air intake pipe 36, a throttle body 38, and an auxiliary air intake passage defining member 41. The engine unit 30 further includes the shroud 42 and the pivot shaft 31. The pivot shaft 31 serves as a pivot center about which the engine unit 30 is pivotable with respect to the vehicle body frame 10.

The engine body 21 is disposed in a rearward direction with respect to the front wall 28a of the vehicle body cover 28 in the lower space G1 below the seat 25.

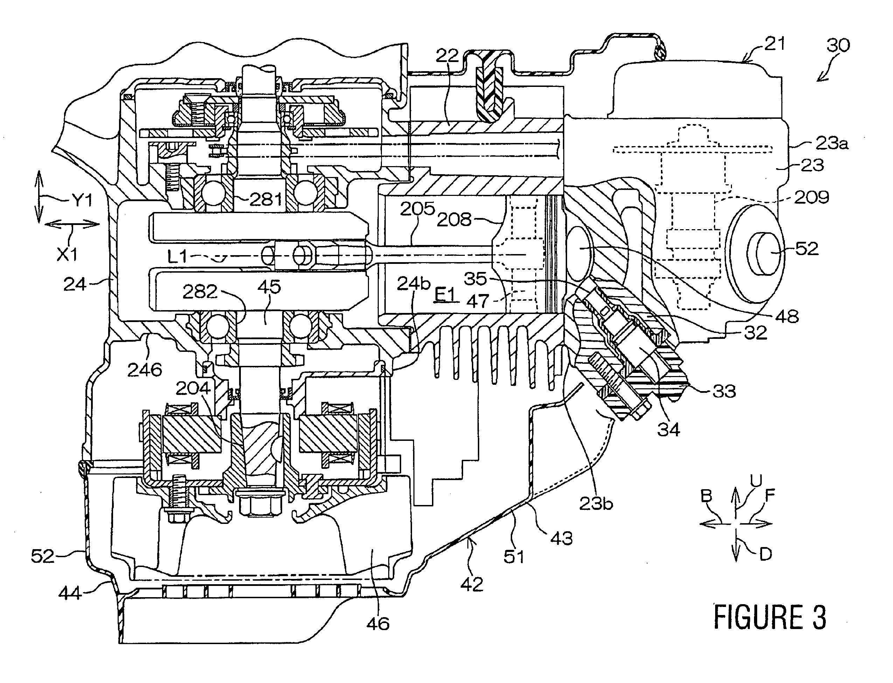

Fig. 3 is a partially sectional view of the engine unit 30 as seen in plan. That is, a part of the engine unit 30 is shown in horizontal section. The engine body 21 has a cylinder axis L1 extending in the direction (X1) between the front and the rear of the vehicle. The engine body 21 is a single-cylinder four-stroke engine. The engine body 21 includes a cylinder block 22, a cylinder head 23 attached to a front end portion of the cylinder block 22, and a crank case 24 attached to a rear end portion of the cylinder block 22.

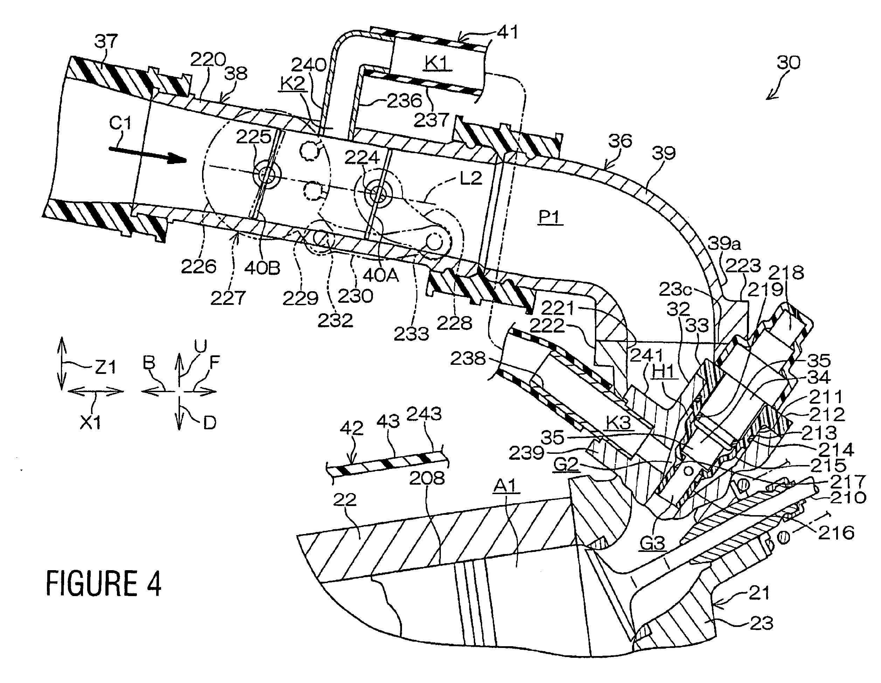

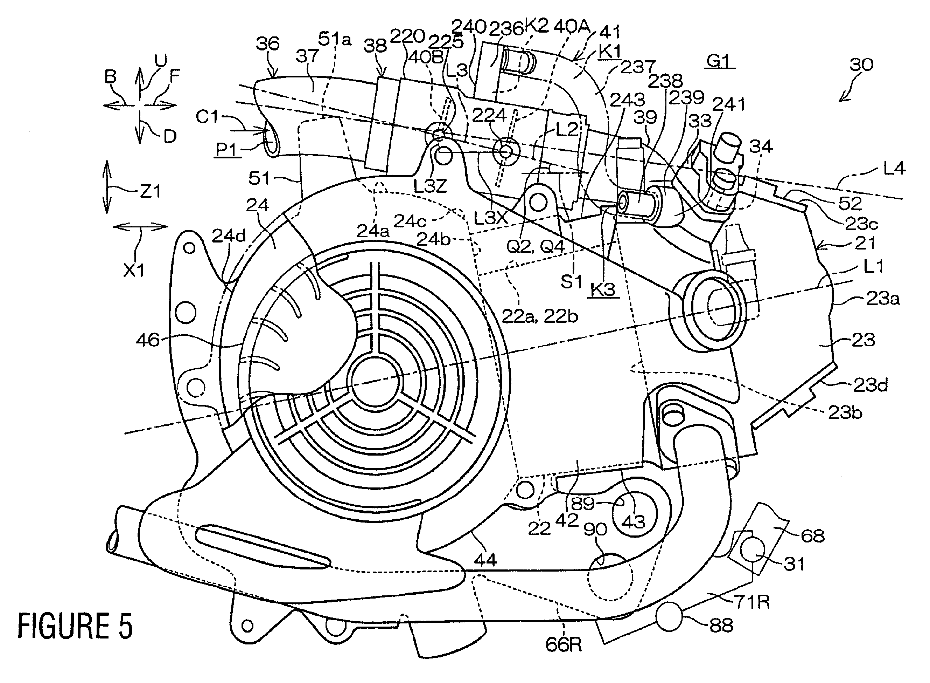

Fig. 4 is a vertical sectional view illustrating major portions of the engine unit 30 as seen from the right side. Fig. 5 is a partly broken right side view illustrating the engine unit 30.

Referring to Figs. 3 and 5, the shroud 42 is attached to the engine body 21 for cooling the engine body 21. The shroud 42 includes a tubular portion 43 which entirely surrounds the cylinder block 22 and a rear end portion 23b of the cylinder head 23, and a side plate 44 which covers the crank case 24 from the right side.

The tubular portion 43 includes an upper wall 243 disposed above the engine body 21. The upper wall 243 covers an upper surface 22a of the cylinder block 22, and a part of an upper surface of the rear end portion 23b of the cylinder head 23.

The crank case 24 defines a rear portion of the engine body 21. A crank shaft 45 extending transversely (Y1) to the vehicle is accommodated in the crank case 24. The crank shaft 45 is rotatably supported by the crank case 24 via bearings 281, 282. A right end portion 204 of the crank shaft 45 projects from a right side surface 246 of the crank case 24. A fan 46 is connected to the right end portion 204 of the crank shaft 45 for unitary rotation. The fan 46 is driven by the rotation of the crank shaft 45. Air is introduced as cooling wind into the shroud 42 from the outside by the fan 46 for cooling the engine body 21. A large end portion of a connecting rod 205 is connected to an intermediate portion of the crank shaft 45.

The cylinder block 22 is a tubular member connected to a front end face 24b of the crank case 24. An inside space of the cylinder block 22 is defined as a cylinder chamber E1. A piston 208 is accommodated in the cylinder chamber E1 so as to be reciprocally movable along the cylinder axis L1. The cylinder axis L1 is a center axis of the cylinder block 22. The cylinder axis L1 extends generally in the direction (X1) between the front and the rear of the vehicle and, more specifically, is inclined upwardly toward the front. The cylinder axis L1 is not necessarily required to be parallel to the vehicle axis X1 in the direction between the front and the rear. The piston 208 is connected to a small end portion of the connecting rod 205 via a piston pin 47.

The cylinder head 23 is connected to a front end face of the cylinder block 22, and defines the front portion of the engine body 21. A cam shaft 209 for driving an air intake valve (not shown) and an exhaust valve 48 is accommodated in the cylinder head 23.

Referring to Figs. 4 and 5, a space defined by the piston 208 accommodated in the cylinder block 22, the cylinder block 22 and the cylinder head 23 serves as a combustion chamber A1 in which a fuel-air mixture is subjected to combustion. The air intake valve 210 and the exhaust valve 48 are provided in the cylinder head 23 as facing the combustion chamber A1.

The cylinder head 23 includes a first tubular boss 32 provided in an upper right portion thereof. The first boss 32 is an integral part of the cylinder head 23. The first boss 32 projects out of the shroud 42. A distal end portion of the first boss 32 is located outside the shroud 42 and exposed from the shroud 42. An inside space of the first boss 32 communicates with a main air intake passage P1 (to be described later) around the air intake valve 210.

An injector (fuel injection device) 34 is attached to the first boss 32 via a synthetic resin holder 33. The injector 34, which is attached to the cylinder head 23, is located at the front end of the engine body 21.

The first boss 32 is located on a right side of a connection pipe 39 (to be described later) of the air intake pipe 36. Thus, the injector 34 and an air intake port 221 to be described later are located at different positions in the cylinder head 23.

Referring to Fig. 4, the holder 33 includes a cylindrical portion 211 and a flange 212 provided at a proximal end of the cylindrical portion 211. The flange 212 abuts against the distal end of the first boss 32. Thus, the holder 33 is positioned with respect to the first boss 32. The cylindrical portion 211 is accommodated in an accommodation space H1 defined in the first boss 32. A gap between an outer peripheral surface of a proximal end portion 213 of the cylindrical portion 211 and an inner peripheral surface of the first boss 32 is sealed in a liquid-tight manner by a first seal member 214 such as an O-ring. An annular space is defined as a chamber G2 between an outer peripheral surface of an intermediate portion 215 of the cylindrical portion 211 and the inner peripheral surface of the first boss 32. A distal edge of a distal end portion 216 of the cylindrical portion 211 is engaged with the inner peripheral surface of the first boss 32 virtually without any gap.

An inside space of the distal end portion 216 of the cylindrical portion 211 is defined as an injection space G3 adjacent to an injection nozzle 35 of the injector 34. The injection space G3 is provided as a space defined adjacent to the injection nozzle 35. The injection space G3 is thus provided in the cylinder head 23, and communicates with the combustion chamber A1 via the air intake valve 210. The distal end portion 216 of the cylindrical portion 211 is formed with a plurality of through-holes 217. The through-holes 217 (e.g., four through-holes) are located equidistantly on the circumference of the distal end portion 216 of the cylindrical portion 211. The chamber G2 communicates with the injection space G3 via the through-holes 217.

The injector 34 serves to inject fuel supplied from a fuel tank (not shown) into the air intake passage. The injector 34 includes an injector body 218 having an elongated shape, and an injection nozzle 35 disposed at a distal end of the injector body 218.

The injector body 218 is inserted in the cylindrical portion 211 of the holder 33 to be retained by the holder 33. A longitudinal half of the injector body 218 is accommodated in the first boss 32. A gap between an outer peripheral surface of the injector body 218 and the inner peripheral surface of the holder 33 is sealed in a liquid-tight manner by a second seal member 219 such as an O-ring. The injection nozzle 35 faces the injection space G3, and is oriented so as to inject the fuel toward the air intake valve 210 via a part of the main air intake passage P1 present in the cylinder head 23. Fuel injection timing at which the injector 34 injects the fuel toward the air intake valve 210 is controlled by a controller such as an ECU (an engine control unit or an electronic control unit) not shown.

The air intake pipe 36 extends from the rear to the front of the vehicle. The air intake pipe 36 is inclined downwardly toward the front of the vehicle as a whole.

The air intake pipe 36 includes an air intake hose 37 connected to an air cleaner (not shown) and extending in a forward direction from the air cleaner, a cylindrical tubular member 220 connected to a front end portion of the air intake hose 37, and a connection pipe 39 connected to a front end of the tubular member 220. A front end of the connection pipe 39 is curved in a downward direction.

The cylinder head 23 includes a tubular air intake port 221. The part of the main air intake passage P1 present in the cylinder head 23 is defined by the air intake port 221. The air intake valve 210 is located at one of opposite ends of the air intake port 221. The other end of the air intake port 221 opens into an upper surface of the cylinder head 23. The other end of the air intake port 221 is defined by a flange 222 provided on the upper surface 23c of the cylinder head 23. The flange 222 abuts against a flange 223 provided at a front end portion 39a of the connection pipe 39, and is fixed to the flange 223 by fixture screws not shown. Thus, the air intake port 221 is connected to the front end portion 39a of the connection pipe 39 (i.e., a downstream end of the air intake pipe 36).

The main air intake passage P1 is defined by the air intake port 221 of the cylinder head 23 and the air intake pipe 36.

The throttle body 38 includes the tubular member 220, and two throttle valves, i.e., first and second throttle valves 40A, 40B. The tubular member 220 has a center axis L2 extending in the direction (X1) between the front and the rear of the vehicle. The tubular member 220 is located above the cylinder block 22 of the engine body 21 and above the upper wall 243 of the tubular portion 43 of the shroud 42. Thus, the throttle body 38 is entirely located outside the shroud 42.

The first and second throttle valves 40A, 40B each serve to open and close the main air intake passage P1 in the air intake pipe 36. The first throttle valve 40A and the second throttle valve 40B are spaced from each other in an intake air flow direction C1 in the main air intake passage P1. The first throttle valve 40A and the second throttle valve 40B are accommodated in the tubular member 220. The first throttle valve 40A is located downstream of the second throttle valve 40B with respect to the intake air flow direction C1. That is, the first throttle valve 40A is located between the second throttle valve 40B and the cylinder head 23 in the main air intake passage P1. The first throttle valve 40A and the second throttle valve 40B each have a disk shape.

The first throttle valve 40A is supported by a first rotation shaft 224 extending perpendicularly to the center axis L2 of the tubular member 220. The second throttle valve 40B is supported by a second rotation shaft 225 extending perpendicularly to the center axis L2 of the tubular member 220. The first rotation shaft 224 and the second rotation shaft 225 each extend transversely (Y1) to the vehicle.

Referring to Fig. 5, the first rotation shaft 224 and the second rotation shaft 225 each project to the right of the tubular member 220 from a right side surface of the tubular member 220.

As described above, the air intake pipe 36 is inclined downwardly toward the front. Thus, the center axis L2 of the tubular member 220 is inclined in a downward direction toward the front. The inclination angle Q2 of the center axis L2 of the tubular member 220 with respect to a horizontal plane S1 is, for example, less than 45 degrees. In this embodiment, the inclination angle Q2 is several degrees. That is, the inclination angle Q2 of the center axis L2 with respect to the vehicle axis X1 in the direction between the front and the rear is several degrees as seen from the lateral side. The first throttle valve 40A is located in front of the second throttle valve 40B at a lower position than the second throttle valve 40B.

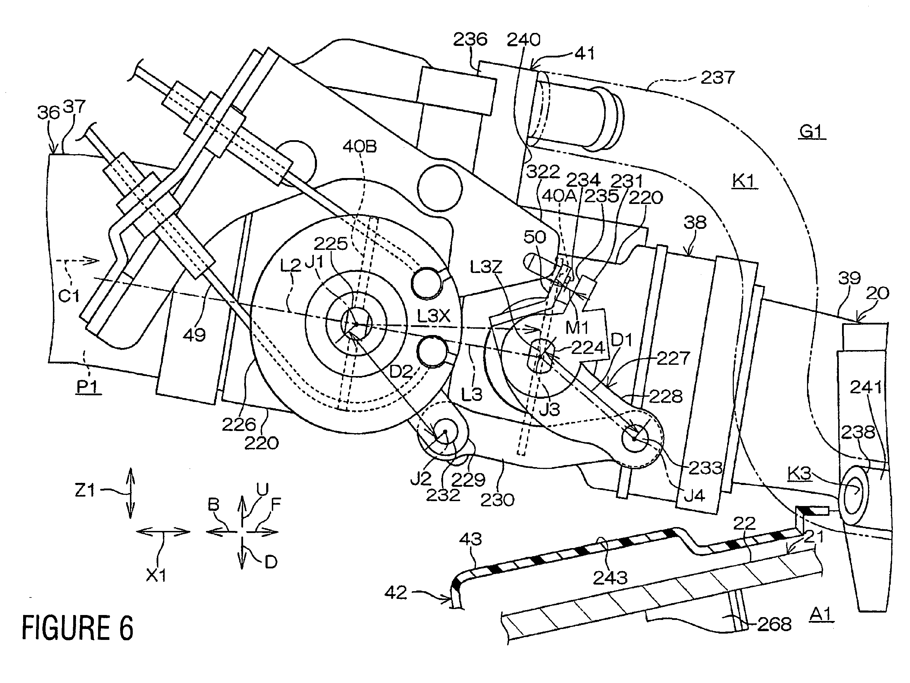

Fig. 6 is a schematic right side view illustrating major portions around the throttle body 38 partly in section. Fig. 6 illustrates a state in which the first throttle valve 40A and the second throttle valve 40B are fully closed. The state in which the first throttle valve 40A and the second throttle valve 40B are fully closed herein means a state of the first throttle valve 40A and the second throttle valve 40B observed when a throttle grip is not operated during idling. The following description is based on the fully closed state of the first throttle valve 40A and the second throttle valve 40B.

Referring to Fig. 6, the first rotation shaft 224 and the second rotation shaft 225 are rotatably supported by the tubular member 220. A center axis J3 of the first rotation shaft 224 serves as a pivot center of the first throttle valve 40A, while a center axis J1 of the second rotation shaft 225 serves as a pivot center of the second throttle valve 40B.

With the motorcycle 200 seen from the right side, a second phantom line segment L3 is herein defined as extending between the center axis J3 of the first rotation shaft 224 serving as the rotation center axis of the first throttle valve 40A and the center axis J1 of the second rotation shaft 225 serving as the rotation center axis of the second throttle valve 40B. The second phantom line segment L3 overlaps the center axis L2 of the tubular member 220. The second phantom line segment L3 has a dimension L3X in the direction between the front and the rear as measured in the direction (X1) between the front and the rear of the vehicle and a vertical dimension L3Z as measured vertically (Z1) with respect to the vehicle, and the dimension L3X (first dimension) in the direction between the front and the rear is greater than the vertical dimension L3Z (second dimension) (L3Z < L3X).

When the first throttle valve 40A and the second throttle valve 40B are fully closed, the first throttle valve 40A at least partly overlaps the second throttle valve 40B in the direction (X1) between the front and the rear of the vehicle. In this embodiment, the first throttle valve 40A mostly overlaps the second throttle valve 40B in the direction (X1) between the front and the rear of the vehicle. Thus, the first and second throttle valves 40A, 40B at least partly overlap each other as seen in the direction (X1) between the front and the rear of the vehicle.

The first throttle valve 40A is rotated together with the first rotation shaft 224 about the first rotation shaft 224 by the rotation of the first rotation shaft 224. Similarly, the second throttle valve 40B is rotated together with the second rotation shaft 225 about the second rotation shaft 225 by the rotation of the second rotation shaft 225.

A driving pulley 226 is coupled to a right end portion of the second rotation shaft 225 for unitary rotation. A throttle cable 49 is attached to the driving pulley 226. The throttle cable 49 has opposite ends, one of which is connected to the throttle grip of the handlebar 16 and the other of which is connected to the driving pulley 226. With this arrangement, the driving pulley 226 is rotated in response to a throttle operation performed by the rider. The rotation of the driving pulley 226 rotates the second rotation shaft 225, thereby opening and closing the second throttle valve 40B.

The opening/closing operation of the second throttle valve 40B is linked with the opening/closing operation of the first throttle valve 40A by a link mechanism 227. That is, the first and second throttle valves 40A, 40B are coupled to each other.

The link mechanism 227 has a so-called lost motion structure such that the first throttle valve 40A starts the opening operation with a time delay after the start of the opening operation of the second throttle valve 40B. The link mechanism 227 is disposed on the right side of the tubular member 220 of the throttle body 38, and includes a first main link member 228, a second main link member 229 disposed on the rear side of the first main link member 228, a sub-link member 230, and a rotation transmission member 231.

The second main link member 229 is a small piece provided integrally with the driving pulley 226. The second main link member 229 is disposed at the right end portion of the second rotation shaft 225, and is rotatable about the second rotation shaft 225.

A second connection shaft 232 is attached to the second main link member 229. The second connection shaft 232 is parallel to the second rotation shaft 225. The second main link member 229 is connected to a rear end portion of the sub-link member 230 via the second connection shaft 232 for relative rotation.

The sub-link member 230 is a plate member elongated in the direction (X1) between the front and the rear of the vehicle, and links the second main link member 229 to the first main link member 228.

The sub-link member 230 is disposed below the first rotation shaft 224 and the second rotation shaft 225.

A first connection shaft 233 is located at a lower end of the first main link member 228. The sub-link member 230 has a front end portion connected to a lower end portion of the first main link member 228 via the first connection shaft 233 for relative rotation. The first connection shaft 233 is parallel to the first rotation shaft 224.

The first main link member 228 is an elongated metal plate member. The first main link member 228 is inclined in a downward direction toward the front.

An upper end portion of the first main link member 228 includes an extension member 50 extending away from the center axis J3 of the first rotation shaft 224. A press member 234 is provided on the extension member 50. The press member 234 projects from the extension member 50 in one of opposite circumferential directions of the first rotation shaft 224 (in a rightward direction in Fig. 6). Thus, the press member 234 is opposed to a to-be-pressed member 235 (to be described later) of the rotation transmission member 231 circumferentially with respect to the first rotation shaft 224.

An intermediate portion of the first main link member 228 is connected to a right end portion of the first rotation shaft 224 for relative rotation. Thus, the first main link member 228 is rotatable independently of the first rotation shaft 224.

The center axis J1 of the second rotation shaft 225 serving as the pivot center of the second main link member 229 is spaced a distance D2 from the center axis J2 of the second connection shaft 232. Further, the center axis J3 of the first rotation shaft 224 serving as the pivot center of the first main link member 228 is spaced a distance D1 from a center axis J4 of the first connection shaft 233. A relationship between the distances D1 and D2 is D2 > D1.

The rotation transmission member 231 is a metal plate member. The rotation transmission member 231 is connected to the first rotation shaft 224 for unitary rotation. The to-be-pressed member 235 to be brought into abutment against the press member 234 is provided on the rotation transmission member 231. The to-be-pressed member 235 extends away from the center axis J3 of the first rotation shaft 224. With the second throttle valve 40B being fully closed, the press member 234 and the to-be-pressed member 235 are opposed to and spaced a predetermined distance M1 from each other circumferentially with respect to the first rotation shaft 224.

Although not shown, a torsion coil spring is disposed between the tubular member 220 of the throttle body 38 and the first main link member 228. Thus, a force is applied to the first throttle valve 40A in a valve closing direction.

Although not shown, another torsion coil spring is disposed between the tubular member 220 of the throttle body 38 and the driving pulley 226. A force of this torsion coil spring is transmitted to the second rotation shaft 225 via the driving pulley 226. Thus, the force is applied to the second throttle valve 40B in a valve closing direction.

Referring to Fig. 4, the auxiliary air intake passage defining member 41 extends from the tubular member 220 of the throttle body 38 to the first boss 32 of the cylinder head 23. The entire auxiliary air intake passage defining member 41 is located outside the shroud 42. The auxiliary air intake passage defining member 41 defines an auxiliary air intake passage K1.

As described above, the first boss 32 is provided as the integral part of the cylinder head 23. The injector 34 is fixed in the first boss 32. The cylinder head 23 further includes a fourth boss 239 provided integrally with the first boss 32. The fourth boss 239 extends perpendicularly to an axis of the injector 34. The cylinder head 23 further includes a third boss 238 attached to the fourth boss 239.

The auxiliary air intake passage defining member 41 includes a second boss 236 fixed to the tubular member 220, the fourth boss 239 of the cylinder head 23, the third boss 238 attached to the fourth boss 239, and a hose 237 which connects the third boss 238 to the second boss 236.

The second boss 236 is an L-shaped tubular metal member. The second boss 236 is disposed on an upper portion of the tubular member 220. One of opposite end portions of the second boss 236 serves as an upstream end defining portion 240 of the auxiliary air intake passage defining member 41.

One of opposite ends of the second boss 236 is fixed to the tubular member 220 between the first throttle valve 40A and the second throttle valve 40B. A part of the auxiliary air intake passage K1 present in the second boss 236 is defined as an upstream end portion K2 of the auxiliary air intake passage K1, and communicates with the main air intake passage P1.

The hose 237 is a tube formed of a flexible material such as rubber. One of opposite ends of the hose 237 is connected to the other end of the second boss 236.

One of opposite ends of the third boss 238 is connected to the other end of the hose 237. The fourth boss 239 is provided integrally with the first boss 32. Center axes of the fourth boss 239 and the first boss 32 extend in a generally perpendicular manner to each other.

Referring to Figs. 4 and 5, the fourth boss 239 is located outside the shroud 42. A portion of the auxiliary air intake passage K1 present in the fourth boss 239 defines a downstream end portion K3 of the auxiliary air intake passage K1. The downstream end portion K3 communicates with the chamber G2 in the first boss 32. The other end of the third boss 238 is connected to the fourth boss 239.

With the aforementioned arrangement, the upstream end portion K2 of the auxiliary air intake passage K1 communicates with the main air intake passage P1 between the first and second throttle valves 40A, 40B. The downstream end portion K3 of the auxiliary air intake passage K1 communicates with the injection space G3 via the chamber G2 and the through-holes 217.

Intake air is introduced as assist air into the auxiliary air intake passage K1 from the main air intake passage P1. The assist air flowing through the auxiliary air intake passage K1 is further introduced into the injection space G3 via the chamber G2 and the through-holes 217 of the holder 33. The assist air supplied into the injection space G3 is applied to the fuel injected from the injector 34, thereby promoting the disintegration of the fuel.

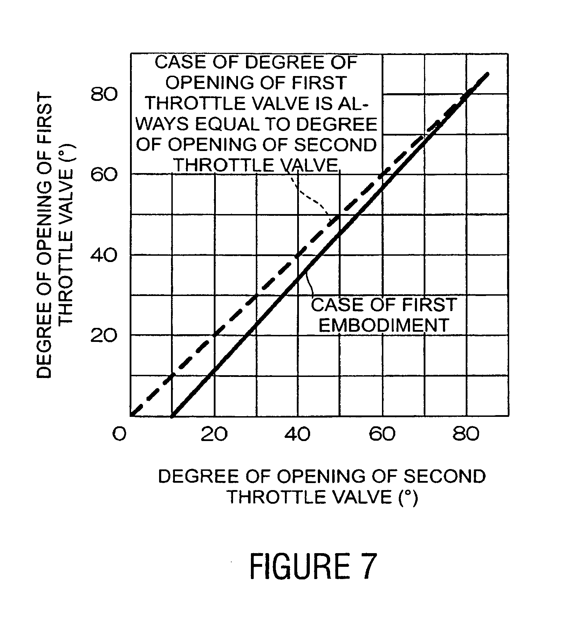

Fig. 7 is a graph showing relationships between the degree (angle) of opening of the first throttle valve 40A and the degree of opening of the second throttle valve 40B. In Fig. 7, the degree of opening of the first throttle valve 40A is zero during idling. Similarly, the degree of opening of the second throttle valve 40B is zero during idling.

In Fig. 7, a solid line indicates a relationship between the degrees of opening of the first and second throttle valves 40A, 40B in this embodiment. As indicated by the solid line, the degree of opening of the first throttle valve 40A is kept at zero when the degree of opening of the second throttle valve 40B is not greater than 10 degrees.

On the other hand, a broken line in Fig. 7 indicates that the degree of opening of the first throttle valve is always equal to the degree of opening of the second throttle valve because the lost motion structure is not provided. As indicated by the broken line and the solid line, the first throttle valve 40A is opened with a time delay after the second throttle valve 40B is opened in this embodiment. The operations of the first and second throttle valves 40A, 40B will be described below in greater detail.

Referring to Figs. 6 and 7, the degrees of opening of the first throttle valve 40A and the second throttle valve 40B are controlled in the following manner according to a change in load (throttle operating amount). First, the first throttle valve 40A located on a downstream side with respect to the intake air flow direction C1 is maintained in a fully closed position when the vehicle is operated in an operation state ranging from a non-load operation state (idling state) to a predetermined partial load operation state.

More specifically, until the operation state reaches the partial load operation state, the rotation of the driving pulley 226 occurring due to the throttle operation performed by the rider is not transmitted to the first rotation shaft 224 but transmitted only to the second rotation shaft 225.

This is because the press member 234 of the first main link member 228 and the to-be-pressed member 235 of the rotation transmission member 231 are spaced the distance M1 from each other on the circumference of the first rotation shaft 224. At this time, the first main link member 228 is pivoted in response to the pivoting of the second main link member 229, but the rotation transmission member 231 is not pivoted.

Therefore, only the second throttle valve 40B is opened or closed by the rotation of the second rotation shaft 225. At this time, the sub-link member 230 and the first main link member 228 operate in response to the operation of the second main link member 229. Thus, the first main link member 228 is rotated about the first rotation shaft 224. However, the first rotation shaft 224 and the first throttle valve 40A are not rotated until the press member 234 of the first main link member 228 is brought into abutment against the to-be-pressed member 235.

Therefore, as shown in Figs. 4 and 7, the amount of air flowing into the injection space G3 of the injection nozzle 35 is controlled only based on the degree of opening of the second throttle valve 40B until the operation state reaches the partial load operation state. In the partial load operation state, the assist air flowing into the auxiliary air intake passage K1 is mixed with the fuel injected from the injection nozzle 35 in the injection space G3. Thus, the disintegration of the fuel is promoted to increase the fuel combustion efficiency. This reduces the possibility of imperfect fuel combustion which is liable to occur at the cold start of the engine.

On the other hand, when the operation state is shifted from the partial load operation state to a higher load operation state, the first throttle valve 40A is opened according to the throttle operation.

Thus, not only the assist air flowing through the auxiliary air intake passage K1 but also the intake air flowing through the other end of the air intake port 221 is introduced into the cylinder head 23.

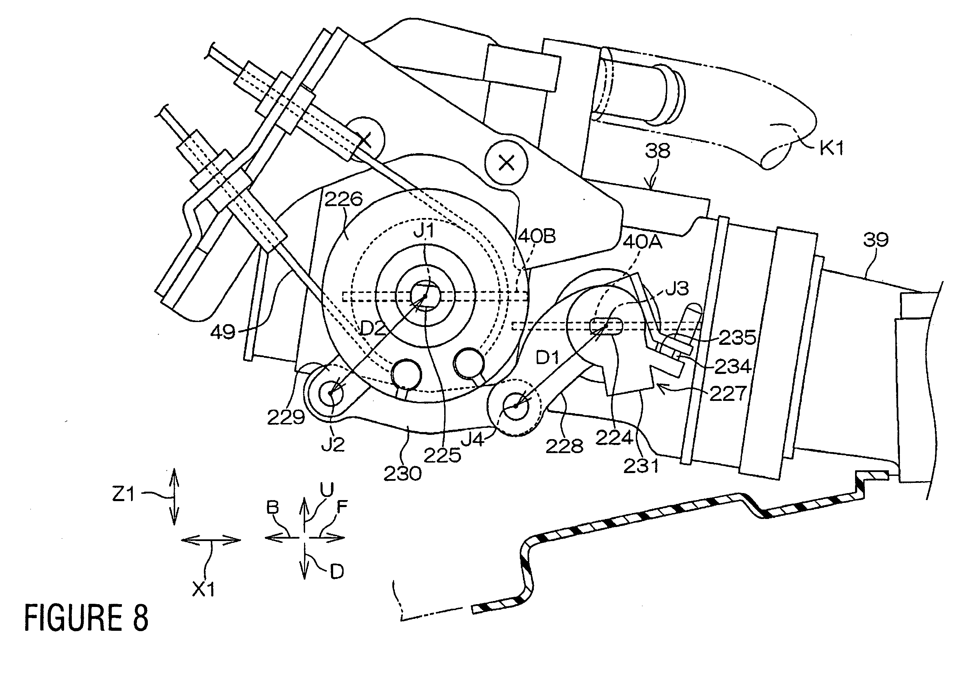

Reference will be next made to Fig. 7 and Fig. 8 which is a schematic right side view illustrating the throttle body 38 with the first throttle valve 40A and the second throttle valve 40B being fully open. More specifically, when the operation state is shifted from the partial load operation state to the higher load operation state, the rotation amount of the first main link member 228 with respect to a reference rotation amount observed during idling exceeds a predetermined level. As a result, the press member 234 of the first main link member 228 is brought into abutment against the to-be-pressed member 235 of the rotation transmission member 231. Therefore, the rotation transmission member 231 and the first rotation shaft 224 are rotated in response to the rotation of the first main link member 228, whereby the first throttle valve 40A is rotated. Thus, not only the intake air flowing through the auxiliary air intake passage K1 but also the air flowing through the connection pipe 39 is introduced into the cylinder head 23.

Since the distance D2 is greater than the distance D1 in the link mechanism 227 as described above, the opening/closing speed of the first throttle valve 40A is higher than that of the second throttle valve 40B in the higher load operation state. As a result, the first throttle valve 40A is fully opened, when the second throttle valve 40B is fully opened.

Referring to Fig. 5, the crank case 24 of the engine body 21 has a greater height than the cylinder head 23 as measured vertically (Z1) with respect to the vehicle. The crank case 24 has a projection piece 51 projecting in an upward direction from an upper surface 24a thereof. An uppermost end 51a of the crank case 24 is defined by an upper end of the projection piece 51.

As described above, the cylinder block 22 is connected to the front end face 24b of the crank case 24. The upper surface 22a of the cylinder block 22 is generally flat. The upper surface 22a of the cylinder block 22 overlaps an intermediate portion of the front end face 24b of the crank case 24 in the direction (X1) between the front and the rear of the vehicle. The upper surface 22a of the cylinder block 22 is located at a lower position than the uppermost end 51a of the crank case 24.

The upper surface 22a of the cylinder block 22 is covered with the upper wall 243 of the tubular portion 43 of the shroud 42 from above. The upper wall 243 overlaps the intermediate portion of the front end face 24b of the crank case 24 vertically (Z1) with respect to the vehicle. The upper wall 243 is located at a lower position than the uppermost end 51a of the crank case 24.

The cylinder head 23 has a front end portion 23a formed with a through-hole (not shown), which is closed by a cap 52. An upper surface of the cap 52 defines a part of the upper surface 23c of the cylinder head 23. The upper surface 23c is located at a lower position than the uppermost end 51a. With the motorcycle 200 seen from the right side, a second phantom line L4 is herein defined as extending in a forward direction from the uppermost end 51a of the crank case 24 into contact with an upper end of the upper surface of the cap 52. At this time, a portion of the tubular member 220 of the throttle body 38 located below the center axis L2 of the tubular member 220 generally is located entirely below the second phantom line L4.

A higher level surface portion 24c is defined by a front portion of the upper surface 24a of the crank case 24, while a lower level surface portion 22b is defined by the upper surface 22a of the cylinder block 22. The higher level surface portion 24c and the lower level surface portion 22b adjoin each other in the direction (X1) between the front and the rear of the vehicle.

With the vehicle seen from a lateral side, the second throttle valve 40B is disposed in association with the higher level surface portion 24c with respect to the vehicle direction X1 between the front and the rear. That is, the second throttle valve 40B is located above the higher level surface portion 24c.

With the vehicle seen from the lateral side, the first throttle valve 40A is disposed in association with the lower level surface portion 22b with respect to the vehicle direction X1 between the front and the rear. That is, the first throttle valve 40A is located above the lower level surface portion 22b.

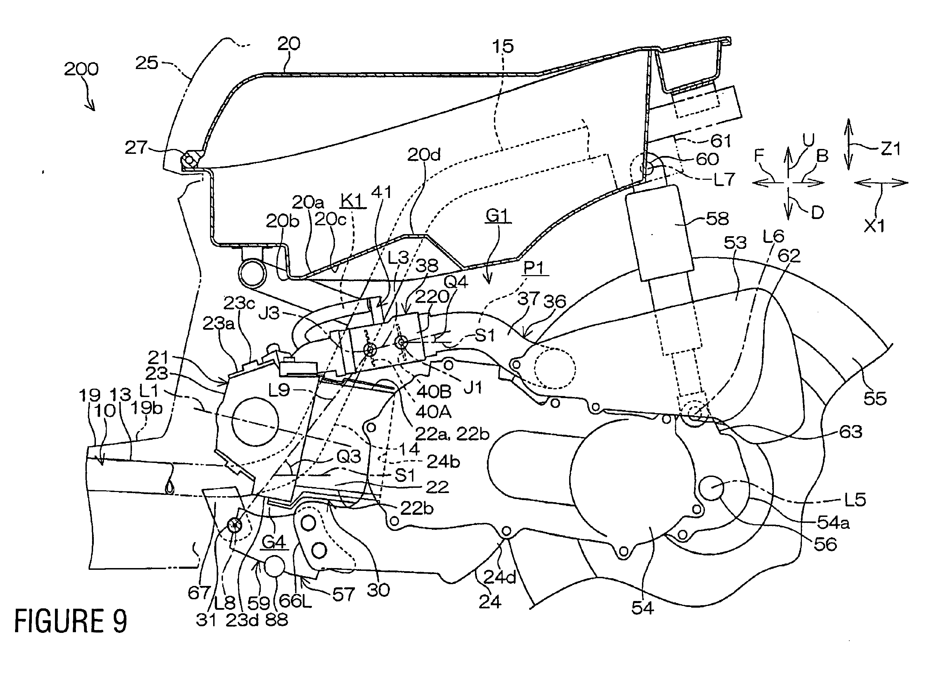

Fig. 9 is a schematic left side view illustrating major portions of the motorcycle 200 partly in section. An air cleaner 53 is connected to a rear end of the air intake hose 37 of the air intake pipe 36. The air cleaner 53 removes dust and the like from air to be introduced into the air intake pipe 36. The air cleaner 53 is attached to an upper portion of a power transmission member 54 to be described later.

The power transmission member 54 is connected to a rear portion of the engine unit 30. The power transmission member 54 transmits the output of the engine body 21 to the rear wheel 55 (driving wheel). The power transmission member 54 includes a housing 54a extending in the direction (X1) between the front and the rear of the vehicle and is fixed to the crank case 24. The rear wheel 55 is connected to a rear portion of the housing 54a of the power transmission member 54 via an axle 56. The rear wheel 55 is located below the seat frames 15 of the vehicle body frame 10. The rear wheel 55 is rotatably supported by the housing 54a of the power transmission member 54 via the axle 56.

The motorcycle 200 further includes a rear suspension device 57. The engine unit 30, the power transmission member 54 and the rear wheel 55 are supported by the rear suspension device 57 so as to be collectively pivotable vertically about the pivot shaft 31 with respect to the vehicle body frame 10.

The rear suspension device 57 is disposed in the vicinity of the axle 56, and includes a stretchable rear shock absorber 58 and a connection mechanism 59 disposed in a forward direction with respect to the axle 56.

An upper end portion of the rear shock absorber 58 is connected to a connection member 61 fixed to the left seat frame 15 via a fixture bolt 60. The upper end portion of the rear shock absorber 58 and the connection member 61 are pivotable about the fixture bolt 60 relative to each other.

A lower end portion of the rear shock absorber 58 is connected to a connection member 63 fixed to the rear portion of the housing 54a of the power transmission member 54 via a fixture bolt 62. The lower end portion of the rear shock absorber 58 and the connection member 63 are pivotable about the fixture bolt 62 relative to each other. With the motorcycle 200 seen from the left side, a center axis L5 of the axle 56, a center axis L6 of the fixture bolt 62 and a center axis L7 of the fixture bolt 60 are generally aligned with each other.

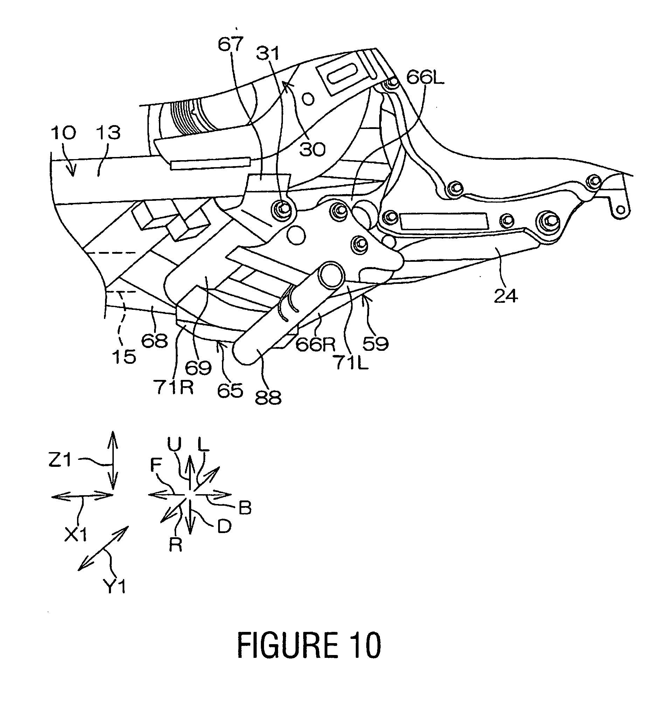

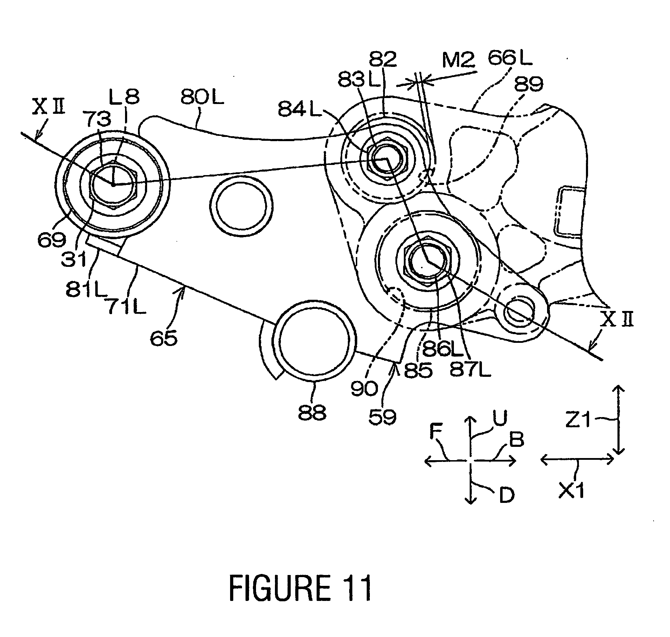

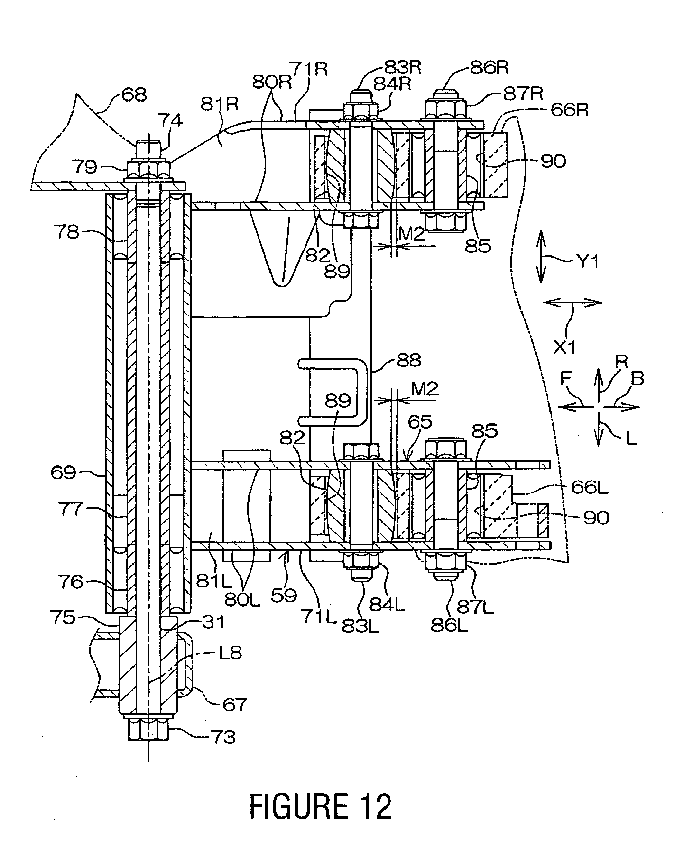

Fig. 10 is a perspective view of the connection mechanism 59 and its peripheral portion. Fig. 11 is a left side view illustrating major portions shown in Fig. 10. Fig. 12 is a sectional view taken along a line XII-XII in Fig. 11.

Referring to Fig. 10, the connection mechanism 59 connects the engine unit 30 to the vehicle body frame 10 pivotally about the pivot shaft 31. The connection mechanism 59 includes a left connection plate 67, a right connection plate 68, the pivot shaft 31 supported by the connection plates 67, 68 and extending transversely (Y1) to the vehicle, a bracket unit 65 supported by the pivot shaft 31, and a pair of connection portions 66L, 66R provided as integral parts of the crank case 24 and supported by the bracket unit 65.

The left connection plate 67 is fixed to the left side frame 13 on a left side of a front end portion of the bracket unit 65. The left connection plate 67 is formed of a metal plate, and disposed below the rear end portion of the left side frame 13.

The right connection plate 68 is fixed to the right side frame 13 on a right side of the front end portion of the bracket unit 65. The right connection plate 68 is formed of a metal plate, and disposed below the rear end portion of the right side frame 13.

The bracket unit 65 connects the pivot shaft 31 to the pair of connection portions 66L, 66R. The bracket unit 65 is cooperative with the pivot shaft 31 and the pair of connection portions 66L, 66R to define a part of the engine unit 30. The pivot shaft 31, the bracket unit 65 and the pair of connection portions 66L, 66R partly define the connection mechanism 59, and partly define the engine unit 30. The bracket unit 65 includes a front pipe 69 extending transversely (Y1) to the vehicle, and a pair of left and right brackets 71L, 71R fixed to the front pipe 69.

Referring to Figs. 11 and 12, the front pipe 69 has a hollow cylindrical shape. The front pipe 69 is disposed between the left connection plate 67 and the right connection plate 68. The pivot shaft 31 extends through the front pipe 69. The pivot shaft 31 is fixed to the right connection plate 68 and the left connection plate 67. The bracket unit 65 is pivotable about the pivot shaft 31.

More specifically, the pivot shaft 31 is a threaded member. The pivot shaft 31 includes a head 73 provided at a left end thereof for engagement with a tool, and a male thread 74 provided on a right end portion.

A first collar 75, a first bush 76, a second collar 77 and a second bush 78 are fitted around the pivot shaft 31 in this order from the left end to the right end of the pivot shaft 31.

The first collar 75 is fixed to the left connection plate 67. The first bush 76 and the second bush 78 are disposed between an outer periphery of the pivot shaft 31 and an inner periphery of the front pipe 69, and connect the pivot shaft 31 to the front pipe 69 for relative pivoting.

The second collar 77 is disposed between the first bush 76 and the second bush 78. The first bush 76 and the second bush 78 are properly positioned transversely (Y1) to the vehicle by the second collar 77.

The male thread 74 of the pivot shaft 31 threadingly engages a nut 79. The nut 79 abuts against the right connection plate 68 from the right side. The threading engagement between the male thread 74 of the pivot shaft 31 and the nut 79 tightly combines the first collar 75, the first bush 76, the second collar 77, the second bush 78 and the right connection plate 68 with each other.

The left bracket 71L is formed of a metal plate. The left bracket 71L includes a pair of vertical walls 80L juxtaposed transversely (Y1) to the vehicle and a bottom wall 81L connecting lower edges of the vertical walls 80L to each other. The right bracket 71R is formed of a metal plate. The right bracket 71R includes a pair of vertical walls 80R juxtaposed transversely (Y1) to the vehicle and a bottom wall 81R connecting lower edges of the vertical walls 80R to each other.

Front ends of the vertical walls 80L of the left bracket 71L and front ends of the vertical walls 80R of the right bracket 71R are fixed to the front pipe 69.

A tubular left stopper 82 is disposed on upper edges of portions which are intermediate in the direction between the front and the rear of the vertical walls 80L. Similarly, a tubular right stopper 82 is disposed on upper edges of portions which are intermediate in the direction between the front and the rear of the vertical walls 80R.

The left stopper 82 is disposed between the pair of vertical walls 80L, and fixed to the vertical walls 80L by a fixture screw 83L and a fixture nut 84L. The right stopper 82 is disposed between the pair of vertical walls 80R, and fixed to the vertical walls 80R by a fixture screw 83R and a fixture nut 84R. The center axes of the stoppers 82 extend transversely (Y1) to the vehicle in alignment with each other.

Right and left third bushes 85 are respectively disposed in a rearward direction of the stoppers 82 below the stoppers 82.

The left third bush 85 is disposed between the pair of vertical walls 80L. The left third bush 85 is fixed to the vertical walls 80L by a fixture screw 86L and a fixture nut 87L. The right third bush 85 is disposed between the pair of vertical walls 80R. The right third bush 85 is fixed to the vertical walls 80R by a fixture screw 86R and a fixture nut 87R.

Center axes of the right and left third bushes 85 extend transversely (Y1) to the vehicle in alignment with each other.

The bottom wall 81L of the left bracket 71L and the bottom wall 81R of the right bracket 71R are connected to each other by a cross pipe 88. Thus, rigid connection between the left bracket 71L and the right bracket 71R is achieved.

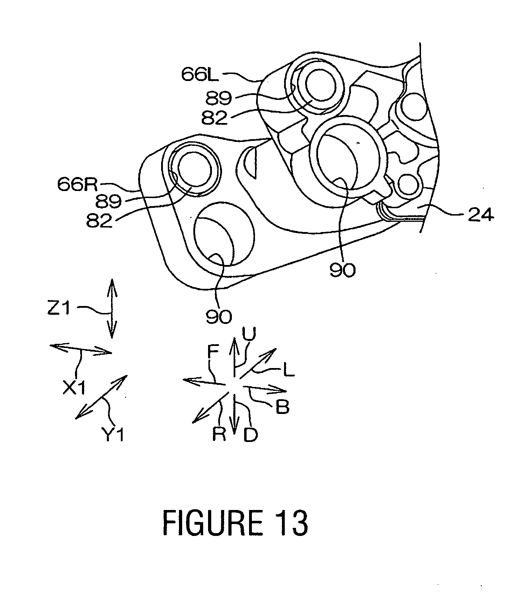

Fig. 13 is a perspective view of the connection portions 66L, 66R and their peripheral portions. Referring to Fig. 13, the connection portions 66L, 66R are provided integrally with the front portion of the crank case 24. The connection portions 66L, 66R are provided in pair as being spaced from each other transversely (Y1) to the vehicle. The left connection portion 66L and the right connection portion 66R are symmetrical transversely (Y1) to the vehicle. The connection portions 66L, 66R each have an upper insertion hole 89 and a lower insertion hole 90.

Referring to Fig. 12, the left connection portion 66L is disposed between the pair of vertical walls 80L of the left bracket 71L. The left stopper 82 and the left third bush 85 are inserted in the upper insertion hole 89 and the lower insertion hole 90, respectively, of the left connection portion 66L.

The right connection portion 66R is disposed between the pair of vertical walls 80R of the right bracket 71R. The right stopper 82 and the right third bush 85 are inserted in the upper insertion hole 89 and the lower insertion hole 90, respectively, of the right connection portion 66R.

Referring to Figs. 1 and 11, it is herein assumed that the motorcycle 200 is parked in an upright attitude with the front wheel 18 and the rear wheel 55 in contact with the horizontal ground surface T1 and with only its weight acting thereon. This state is herein referred to as "1G state." In the 1G state, the stoppers 82 are respectively spaced a predetermined distance M2 from inner peripheral surfaces of the upper insertion holes 89 of the connection portions 66L, 66R. The distance M2 is, for example, about 1 mm. Thus, the crank case 24 and the bracket unit 65 are pivotable about the fixture screws 86L, 86R relative to each other. Since the distance M2 is small, the engine unit 30 substantively is pivotable only about the pivot shaft 31.

Referring to Fig. 9, the pivot shaft 31 is disposed below the rear end portions of the side frames 13 in the vicinity of the side frames 13. As described above, the pivot shaft 31 extends between the left connection plate 67 and the right connection plate 68 (not shown in Fig. 9).

With the motorcycle 200 seen from the left side, the pivot shaft 31 is located in a space G4 defined by a lower surface 23d of the cylinder head 23 and the connection portions 66L, 66R of the crank case 24.

With this arrangement, the pivot shaft 31 is located at a lower position than the cylinder axis L1 of the cylinder block 22. The pivot shaft 31 is located in a forward direction with respect to the crank case 24.

The pivot shaft 31 overlaps the front end portion 23a of the cylinder head 23 vertically (Z1) with respect to the vehicle. Thus, the pivot shaft 31 is located between the front end portion 23a of the cylinder head 23 (the front end portion of the engine unit 30) and the front end surface 24b of the crank case 24 with respect to the vehicle direction X1 between the front and the rear.

The pivot shaft 31 is located below the side frames 13 (foot rest plate support).

The pivot shaft 31 is located below the lower surface 23d of the cylinder head 23. As seen in plan, the tubular member 220 of the throttle body 38 is located between a center axis L8 of the pivot shaft 31 and the center axis L5 of the axle 56 with respect to the vehicle direction X1 between the front and the rear.

The pivot shaft 31 is located in a forward direction with respect to the tubular member 220 of the throttle body 38 as seen in plan.

With the motorcycle 200 seen from the left side, a first phantom line segment L9 is defined as extending between the center axis J3 of the first rotation shaft 224 serving as the rotation center axis of the first throttle valve 40A and the center axis L8 of the pivot shaft 31.

With the motorcycle 200 seen from the left side, the first phantom line segment L9 has a greater inclination with respect to the horizontal plane S1 (vehicle axis X1 in the direction between the front and the rear) than the second phantom line segment L3. That is, an angle Q3 defined between the horizontal plane S1 and the first phantom line segment L9 is greater than an angle Q4 defined between the horizontal plane S1 and the second phantom line segment L3 (Q3 > Q4) with the motorcycle 200 seen from the left side. In other words, the inclination of the first phantom line segment L9 with respect to the vehicle axis X1 in the direction between the front and the rear is greater than the inclination of the second phantom line segment L3 with respect to the vehicle axis X1 in the direction between the front and the rear.

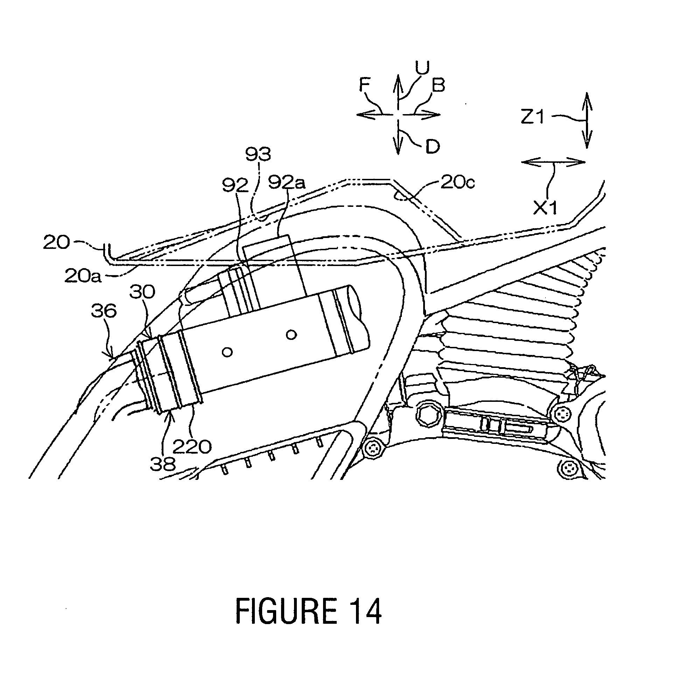

As shown in Fig. 14 which is an enlarged side view illustrating major portions around the upper portion of the engine unit 30, a protection member 92 is disposed above the tubular member 220 of the throttle body 38. The protection member 92 is provided integrally with the tubular member 220 for suppressing direct contact of foreign matter with the tubular member 220. An uppermost end 92a of the engine unit 30 is defined by an upper end of the protection member 92. A region of the bottom plate 20a of the storage box 20 opposed to the uppermost end 92a vertically (Z1) with respect to the vehicle is defined as the opposed region 93. The opposed region 93 is formed with the recess 20c as described above.

Next, the movement of the engine unit 30 about the pivot shaft 31 will be described in comparison with a comparative example.

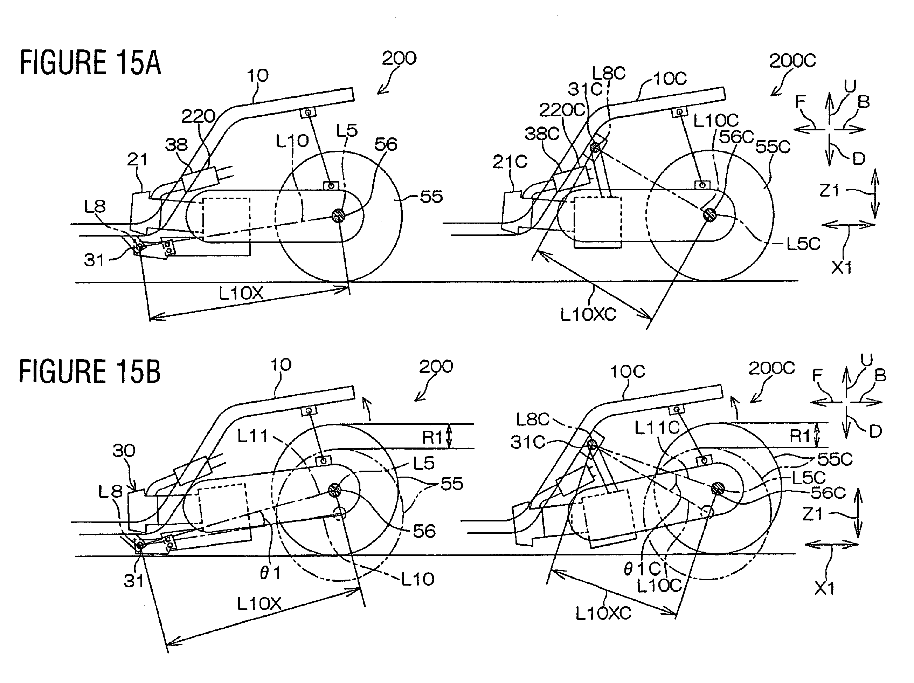

Fig. 15(A) is schematic left side view illustrating major portions of the motorcycle 200 according to this embodiment, and maj or portions of a motorcycle 200C of the comparative example. In Fig. 15(A), the motorcycles 200, 200C are in the 1G state described above. The 1G state is herein defined as a reference state.

Referring to Fig. 15(A), a comparison between the motorcycles 200 and 200C shows that a positional relationship between the pivot shaft 31 and the vehicle body frame 10 differs from a positional relationship between the pivot shaft 31C and the vehicle body frame 10C. More specifically, the motorcycle 200C has substantially the same construction as the motorcycle 200, except that the pivot shaft 31C of the motorcycle 200C is located above an engine body 21C and a tubular member 220C of a throttle body 38C.

With the motorcycle 200 in the reference state being seen from a lateral side, a reference phantom line segment L10 extends between the center axis L8 of the pivot shaft 31 and the center axis L5 of the axle 56 of the rear wheel 55. With the motorcycle 200C in the reference state being seen from a lateral side, a reference phantom line segment L10C extends between a center axis L8C of the pivot shaft 31C and a center axis L5C of an axle 56C of a rear wheel 55C. A length L10XC of the reference phantom line segment L10C is shorter than a length L10X of the reference phantom line segment L10 (L10XC < L10X).

As shown in Fig. 15(B), the rear wheel 55 of the motorcycle 200 is pivotable in an upward direction from the reference state with respect to the vehicle body frame 10 by a predetermined maximum stroke amount R1. Similarly, the rear wheel 55C of the motorcycle 200C is pivotable in an upward direction from the reference state with respect to the vehicle body frame 10C by the predetermined maximum stroke amount R1.

When the motorcycle 200 with its rear wheel 55 shifted in an upward direction from the reference state by the predetermined stroke amount R1 is seen from the lateral side, an upper phantom line segment L11 extends between the center axis L8 of the pivot shaft 31 and the center axis L5 of the axle 56 of the rear wheel 55. The reference phantom line segment L10 crosses the upper phantom line segment L11 at an upper pivot angle θ1. When the motorcycle 200C with its rear wheel 55C shifted in an upward direction from the reference state by the predetermined stroke amount R1 is seen from the lateral side, an upper phantom line segment L11C extends between the center axis L8C of the pivot shaft 31C and the center axis L5C of the axle 56C of the rear wheel 55C. The reference phantom line segment L10C crosses the upper phantom line segment L11C at an upper pivot angle θ1C.

Since the length L10XC of the reference phantom line segment L10C is shorter than the length L10X of the reference phantom line segment L10, a relationship between the upper pivot angle θ1 and the upper pivot angle θ1C is θ1 < θ1C.

Where the motorcycle 200 is in the state shown in Fig. 15(B), the uppermost end 92a of the engine unit 30 and its peripheral portion are as shown in Fig. 14. Thus, the uppermost end 92a of the engine unit 30 is located within the recess 20c.

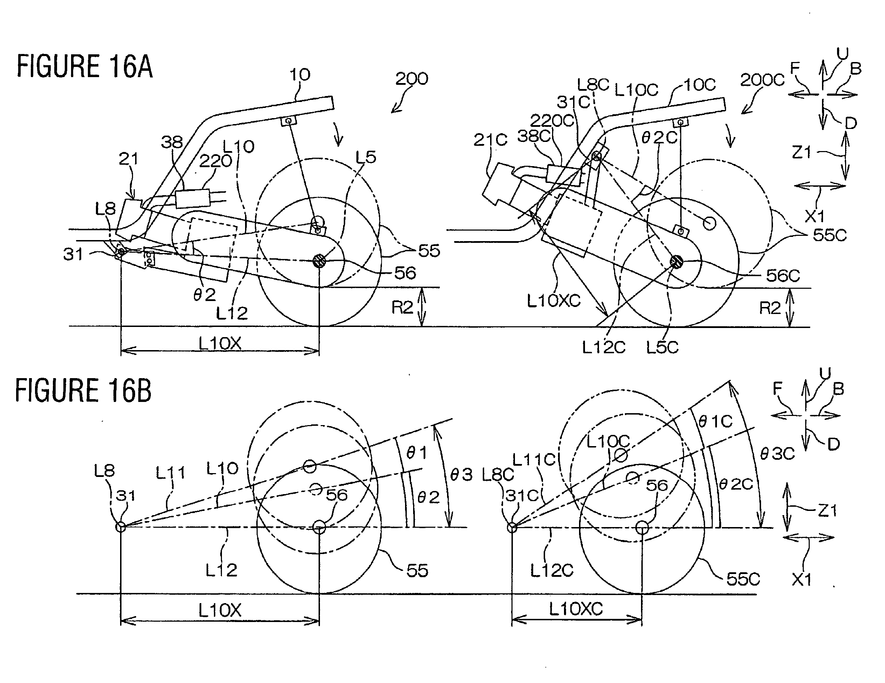

Referring next to Fig. 16(A), the rear wheel 55 of the motorcycle 200 is pivotable in a downward direction from the reference state with respect to the vehicle body frame 10 by a predetermined maximum stroke amount R2. Similarly, the rear wheel 55C of the motorcycle 200C is pivotable in a downward direction from the reference state with respect to the vehicle body frame 10C by the predetermined maximum stroke amount R2.

When the motorcycle 200 with its rear wheel 55 shifted in a downward direction from the reference state by the predetermined stroke amount R2 is seen from the lateral side, a lower phantom line segment L12 extends between the center axis L8 of the pivot shaft 31 and the center axis L5 of the axle 56 of the rear wheel 55. The reference phantom line segment L10 crosses the lower phantom line segment L12 at a lower pivot angle θ2. When the motorcycle 200C with its rear wheel 55C shifted in a downward direction from the reference state by the predetermined stroke amount R2 is seen from the lateral side, a lower phantom line segment L12C extends between the center axis L8C of the pivot shaft 31C and the center axis L5C of the axle 56C of the rear wheel 55C. The reference phantom line segment L10C crosses the lower phantom line segment L12C at a lower pivot angle θ2C.

Since the length L10XC of the reference phantom line segment L10C is shorter than the length L10X of the reference phantom line segment L10, a relationship between the lower pivot angle θ2 and the lower pivot angle θ2C is θ2 < θ2C.

Referring to Fig. 16(B), a sum θ3 of the upper pivot angle θ1 and the lower pivot angle θ2 is a pivotal angle of the rear wheel 55 and the engine unit 30 about the pivot shaft 31 in the motorcycle 200. Further, a sum θ3C of the upper pivot angle θ 1C and the lower pivot angle θ2C is a pivotal angle of the rear wheel 55C and the engine unit 30C about the pivot shaft 31C in the motorcycle 200C. A relationship between the angular sum θ3 and the angular sum θ3C is θ3 < θ3C.

Thus, the stroke amounts R1, R2 from the reference state in the motorcycle 200 are equal to those in the motorcycle 200C. That is, the rear wheel 55 of the motorcycle 200 and the rear wheel 55C of the motorcycle 200C are vertically pivotable at the same stroke amount with respect to the vehicle body frames 10, 10C. However, the sum θ3 of the upper pivot angle θ1 and the lower pivot angle θ2 is relatively small in the motorcycle 200, and the sum θ3C of the upper pivot angle θ1C and the lower pivot angle θ2C is relatively great in the motorcycle 200C.

As shown in Fig. 9, the throttle body 38 is located above the engine body 21 in an attitude such that, with the motorcycle 200 seen from the lateral side, the inclination angle Q3 of the first phantom line segment L9 extending between the rotation center axis J3 of the first throttle valve 40A and the center axis L8 of the pivot shaft 31 with respect to the horizontal plane S1 (vehicle direction X1 between the front and the rear) is greater than the inclination angle Q4 of the second phantom line segment L3 extending between the rotation center axis J3 of the first throttle valve 40A and the rotation center axis J1 of the second throttle valve 40B with respect to the horizontal plane S1 (vehicle direction X1 between the front and the rear), i.e., Q3 > Q4. Thus, the vertical movement of the throttle body 38 occurring due to the pivoting about the pivot shaft 31 is reduced, as perceived by the inventor of the present invention.

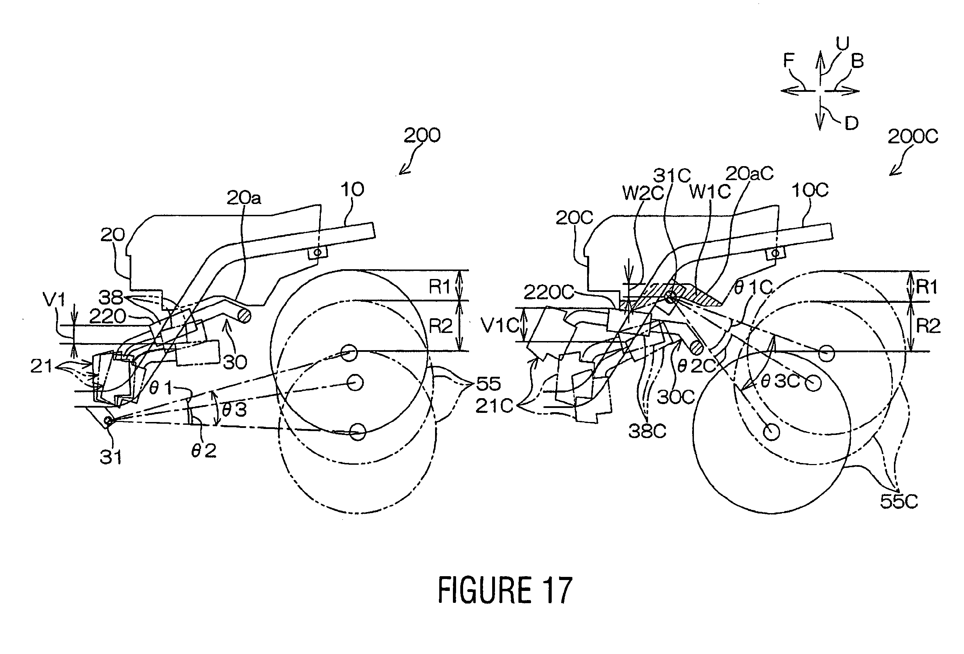

In the motorcycle 200 having the aforementioned layout, i.e., the motorcycle 200 including the so-called downwardly suspended engine unit 30 with the pivot shaft 31 located below the cylinder axis L1 of the engine body 21, the throttle body 38 is vertically movable by a distance V1 in Fig. 17. In the motorcycle 200C including the so-called upwardly suspended engine unit 30C with the pivot shaft 31C located above the engine body 21C, on the other hand, the throttle body 38C is vertically movable by a distance V1C in Fig. 17. A relationship between the vertical movement distances V1 and V1C is V1 < V1C.

The movement distance V1 is herein defined as the distance of the movement of the front end portion of the tubular member 220 of the throttle body 38 observed when the rear wheel 55 is vertically moved by a stroke amount R1+R2. Similarly, the movement distance V1C is herein defined as the distance of the movement of the front end portion of the tubular member 220C of the throttle body 38C observed when the rear wheel 55C is vertically moved by the stroke amount R1+R2.

Thus, the vertical movement distance V1 of the tubular member 220 is relatively small in the motorcycle 200, so that the bottom plate 20a of the storage box 20 can be located at a lower position. In the motorcycle 200C, in contrast, the vertical movement distance V1C of the tubular member 220C is relatively great and, therefore, a bottom plate 20aC of the storage box 20C should be located at a higher position so as not to contact the tubular member 220C.

In the motorcycle 200, the pivot shaft 31 is spaced a greater distance from the storage box 20, thereby obviating the need for locating the bottom plate 20a of the storage box 20 away from the pivot shaft 31. In the motorcycle 200C, in contrast, the pivot shaft 31C is located just below the storage box 20C, so that the bottom plate 20aC of the storage box 20C should be located away from the pivot shaft 31C.

In the motorcycle 200C, the storage box 20C should be thus located away from the tubular member 220C and the pivot shaft 31C. As a result, an accommodation space of the storage box 20C in the motorcycle 200C is smaller by a volume W1C than an accommodation space of the storage box 20 in the motorcycle 200 as indicated by hatching. This is because the height of the storage box 20C is smaller by W2C than the height of the storage box 20 as measured vertically (Z1) with respect to the vehicle.

Such comparative studies were conducted for the first time by the inventor of the present invention. As a result of the comparative studies, the inventor of the present invention found that, even if the engine unit 30 includes the throttle body 38 including the two throttle valves 40A, 40B, the volume of the storage box 20 can be increased by the provision of the so-called downwardly suspended engine. Conventionally, the comparative studies were not thoroughly conducted. The arrangement for increasing the volume of the storage box 20 according to this embodiment is novel, unobvious and superior.

This embodiment has the following effects. The intake air is introduced as the assist air into the injection space G3 adjacent to the injection nozzle 35 from the auxiliary air intake passage K1 at least during idling. Thus, the assist air is applied to the fuel injected from the injection nozzle 35 to promote the disintegration of the fuel. As a result, the fuel combustion efficiency is improved at least during idling.

In this embodiment, the pivot shaft 31 is disposed at a lower position than the cylinder axis L1. This makes it possible to locate the pivot shaft 31 on a side of the cylinder axis L1 opposite from the storage box 20. As a result, the pivot shaft 31 can be located at a forward position without any influence on the storage box accommodation space.

Further, the pivot shaft 31 can be located in a space extending in the direction (X1) between the front and the rear of the vehicle below the foot rest plate 19 at a lower position than the cylinder axis L1 of the cylinder block 22. This makes it possible to locate the pivot shaft 31 at a position further forward. In the motorcycle 200 according to this embodiment, therefore, the pivot shaft 31 is sufficiently spaced in a forward direction from the rear wheel 55 as compared with the motorcycle 200C according to the comparative example in which the pivot shaft 31C is disposed above the cylinder block. Thus, the distance between the center axis L8 of the pivot shaft 31 and the center axis L5 of the axle 56 of the rear wheel 55 as measured in the direction (X1) between the front and the rear of the vehicle can be increased sufficiently.

As a result, the pivot angle of the rear wheel 55 and the engine unit 30 about the pivot shaft 31 observed when the rear wheel 55 is vertically pivoted a unit distance is reduced sufficiently. This reduces a space required for pivoting the throttle body 38 and the like about the pivot shaft 31. Even if the throttle body 38 including the first and second throttle valves 40A, 40B and hence having a relatively great size is employed, the storage box accommodation space can be increased sufficiently, thereby increasing the volume of the storage box 20.

As described above, the pivot shaft 31 is disposed on the side of the cylinder axis L1 opposite from the storage box 20. In the motorcycle 200 according to this embodiment, the pivot shaft 31, and the bracket unit 65 and other components connected to the pivot shaft 31 can be spaced a greater distance from the storage box 20 as compared with the motorcycle 200C in which the pivot shaft 31C is located above the cylinder axis. Therefore, the storage box accommodation space is unlikely to be reduced by a space required for accommodating the pivot axis 31 and the bracket unit 65. Thus, the storage box accommodation space can be increased, thereby increasing the volume of the storage box 20.

The air intake pipe 36 extends in the direction (X1) between the front and the rear of the vehicle. This makes it possible to space the first and second throttle valves 40A, 40B from each other in the direction (X1) between the front and the rear of the vehicle. As a result, the throttle body 38 has a reduced vertical dimension as measured vertically (Z1) with respect to the vehicle. This permits the storage box 20 disposed above the throttle body 38 to have increased height, thereby increasing the volume of the storage box 20. In addition, there is no need to locate the seat 25 at a higher position for increasing the volume of the storage box 20. This suppresses the size increase of the motorcycle 200.

With the motorcycle 200 seen from the lateral side, the first phantom line segment L9 has a greater inclination with respect to the horizontal plane S1 (vehicle axis X1 between the front and the rear) than the second phantom line segment L3. This reduces the distance between the first throttle valve 40A and the pivot shaft 31 as measured in the direction (X1) between the front and the rear of the vehicle.

That is, the distances between the first and second throttle valves 40A, 40B and the pivot shaft 31 can be reduced as measured in the direction (X1) between the front and the rear of the vehicle. This reduces the vertical movement of the first and second throttle valves 40A, 40B observed when the throttle valves 40A, 40B are pivoted a unit angle about the pivot axis 31.

Further, the inclination of the tubular member 220 with respect to the vehicle axis X1 in the direction between the front and the rear is significantly reduced, so that the space required for pivoting the throttle body 38 is reduced. This correspondingly increases the storage box accommodation space.

Of the air intake pipe 36, the connection pipe 39 connecting the tubular member 220 of the throttle body 38 to the cylinder head 23 is disposed at a lower position than the throttle body 38. Thus, the air intake pipe 36 is unlikely to be located above the tubular member 220 of the throttle body 38 in the front portion of the engine unit 30. This makes it possible to increase the height of the storage box 20 as measured vertically (Z1) with respect to the vehicle in the front portion of the engine unit 30, thereby increasing the volume of the storage box 20.

With the motorcycle 200 seen from the lateral side, the dimension L3X in the direction between the front and the rear of the second phantom line segment L3 is greater than the vertical dimension L3Z of the second phantom line segment L3 (L3Z < L3X). This arrangement reduces the inclination of the tubular member 220 of the throttle body 38 with respect to the vehicle direction X1 between the front and the rear, thereby reducing the vertical dimension of the tubular member 220 of the throttle body 38. This increases the height of the storage box 20 provided above the throttle body 38, thereby increasing the volume of the storage box 20.

As seen in the direction (X1) between the front and the rear of the vehicle, the first and second throttle valves 40A, 40B at least partly overlap each other when fully closing the main air intake passage P1. Thus, the throttle body 38 has a reduced vertical dimension. This increases the height of the storage box 20, thereby increasing the volume of the storage box 20.

With the vehicle seen from lateral side, the second throttle valve 40B is disposed in association with the higher level surface portion 24c of the engine body 21 with respect to the vehicle direction X1 between the front and the rear. With the vehicle seen from lateral side, the first throttle valve 40A is associated with the lower level surface portion 22b of the engine body 21 with respect to the vehicle direction X1 between the front and the rear. A step is present between the lower level surface portion 22b and the higher level surface portion 24c of the engine body 21. Thus, a space is defined above the lower level surface portion 22b around the step between the lower level surface portion 22b and the higher level surface portion 24c of the engine body 21. The first throttle valve 40A is partly accommodated in this space.

Therefore, the throttle body 38 can be inclined in a downward direction toward the front of the vehicle, the space occupied by the throttle body 38 and the engine body 21 can be reduced. This reduces the height of the engine unit 30, and correspondingly increases the height of the storage box 20, thereby increasing the volume of the storage box 20. Thus, the storage box accommodation space is increased by effectively utilizing a dead space present above the engine body 21.

With the motorcycle 200 seen from the lateral side, the tubular member 220 of the throttle body 38 is at least partly disposed below the second phantom line L4 extending in a forward direction from the uppermost end 51a of the crank case 24. With this arrangement, a dead space is present between the second phantom line L4 and the engine body 21 as seen from the lateral side. The tubular member 220 is at least partly located in the dead space to effectively utilize the dead space. This correspondingly increases the storage box accommodation space.

The pivot shaft 31 is disposed on the side of the engine body 21 opposite from the storage box 20. This makes it possible to locate the pivot shaft 31 at a lower position. Therefore, it is easy to employ a layout such that the pivot shaft 31 is located below the foot rest plate 19. As a result, the pivot shaft 31 can be spaced a greater distance in a forward direction from the rear wheel 55.

The pivot shaft 31 overlaps the front end portion 23a of the cylinder head 23 (the front end portion of the engine body 21) vertically (Z1) with respect to the vehicle. With this arrangement, the engine body 21 is disposed above the pivot shaft 31. Therefore, when the engine body 21 is pivoted a unit angle about the pivot shaft 31, the movement of the engine body 21 includes a greater movement component in the direction between the front and the rear and a smaller vertical movement component. This reduces the vertical pivotal movement of the engine body 21, thereby reducing the space required for the vertical pivoting of the engine body 21. This correspondingly increases the storage box accommodation space. In addition, the pivot shaft 31 can be disposed at a position further forward.

The pivot shaft 31 is disposed below the side frames 13 of the vehicle body frame 10 which serve as the foot rest plate support. This makes it possible to locate the pivot shaft 31 at a position further forward, so that the pivot shaft 31 can be spaced a greater distance from the rear wheel 55 in the direction (X1) between the front and the rear of the vehicle.

Further, as seen in plan, the pivot shaft 31 is disposed between the front end of the engine unit 30 and the crank case 24 with respect to the vehicle direction X1 between the front and the rear. That is, as seen in plan, the pivot shaft 31 is disposed between the front end portion 23a of the cylinder head 23 and the front end face 24b of the crank case 24 with respect to the vehicle direction X1 between the front and the rear. Therefore, the pivot shaft 31 overlaps the engine unit 30 vertically (Z1) with respect to the vehicle. With this arrangement, the engine unit 30 is disposed just above the pivot shaft 31. Therefore, when the engine unit 30 is pivoted a unit angle about the pivot shaft 31, the movement of the engine unit 30 includes a greater movement component in the direction between the front and the rear and a smaller vertical movement component. This reduces the vertical pivotal movement of the engine unit 30, thereby reducing the space required for the pivoting of the engine unit 30 as measured vertically (Z1) with respect to the vehicle. This correspondingly increases the storage box accommodation space.

The cylinder axis L1 is inclined in an upward direction toward the front of the vehicle. With the vehicle seen from lateral side, the pivot shaft 31 is disposed below the lower surface of the engine body 21, and is adjacent to the front end portion 23a of the cylinder head 23 (the front end portion of the engine body 21) with respect to the vehicle direction X1 between the front and the rear. With this arrangement, the space G4 present below the engine body 21 is a dead space. The dead space is effectively utilized as a pivot shaft accommodation space. This correspondingly increases the storage box accommodation space.

The cylinder axis L1 is inclined in an upward direction toward the front of the vehicle, and the pivot shaft 31 is disposed below the lower surface of the engine body 21 and in a forward direction with respect to the tubular member 220 of the throttle body 38. With this arrangement, a dead space is present below the engine body 21. The dead space is effectively utilized as the pivot shaft accommodation space. Since the pivot shaft 31 is offset from the tubular member 220 in the direction (X1) between the front and the rear of the vehicle, the pivot shaft 31 does not overlap the tubular member 220 vertically (Z1) with respect to the vehicle. This reduces the distance between the pivot shaft 31 and the tubular member 220 as measured vertically (Z1) with respect to the vehicle, thereby correspondingly increasing the height of the storage box 20.

The recess 20c is provided in the lower surface 20b of the storage box 20. This increases the space required for pivoting the engine unit 30 above the engine unit 30. The recess 20c is present only in the region 93 of the lower surface 20b of the storage box 20 opposed to the uppermost end 92a of the engine unit 30. Therefore, the reduction in the volume of the storage box 20 due to the provision of the recess 20c is minimized.

The injector 34 is provided in the first boss 32 of the cylinder head 23, i.e., at a different position from the air intake port 221 in the cylinder head 23. Thus, the injector 34 is not mounted in the air intake pipe 36 projecting in an upward direction from the upper surface 23c of the cylinder head 23, but mounted in the cylinder head 23. As a result, the uppermost portion of the injector 34 is located at a lower position. This correspondingly increases the height of the storage box 20, thereby increasing the volume of the storage box 20.

### Second Embodiment

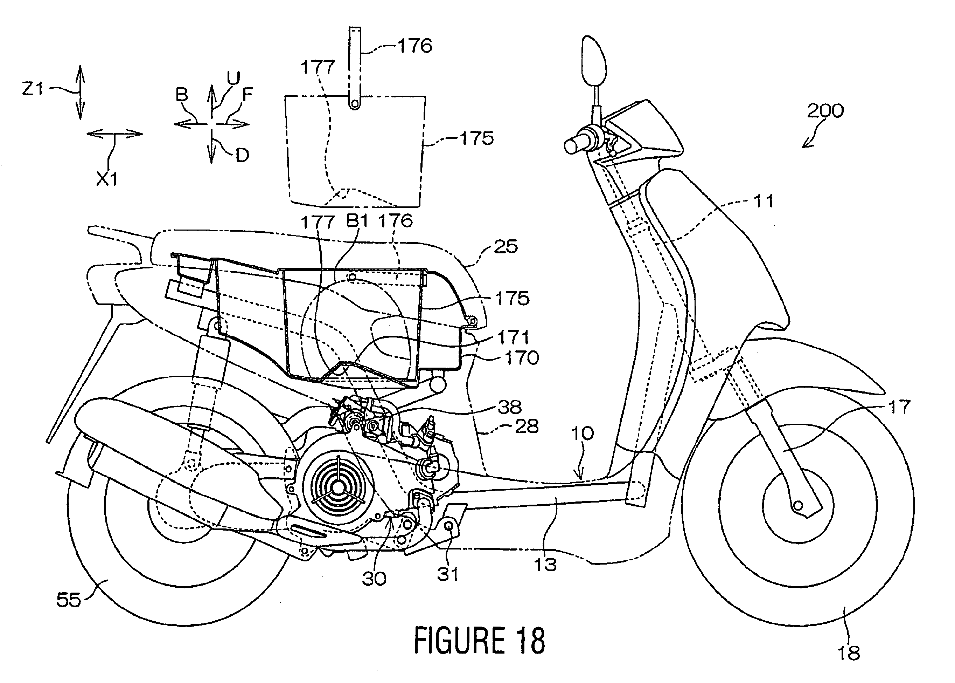

A second embodiment of the present invention will hereinafter be described with reference to Fig. 18. The second embodiment has substantially the same construction as the first embodiment, except that a storage box 170 has a structure different from that of the storage box 20. Therefore, like components will be denoted by like reference numerals, and duplicate description on the construction, the functions and the effects will be omitted.

In the second embodiment, a shopping basket 175 is accommodated in the storage box 170. The shopping basket 175 has an open top, and includes a handle 176. The shopping basket 175 is configured so as to be accommodated in an inside space of the storage box 170 designed to accommodate the helmet B1. Therefore, the shopping basket 175 has a recess 177 provided in a bottom surface thereof for engagement with a projection 171 of the storage box 170. The shopping basket 175 is dimensioned so as to accommodate the helmet B1.

When the rider does not drive the motorcycle 200 of this embodiment, the shopping basket 175 and the helmet B1 are accommodated in the storage box 170. When the rider is to drive the motorcycle 200 to go shopping, the rider takes the helmet B1 out of the storage box 70, and wears the helmet B1. At this time, the shopping basket 175 is kept accommodated in the storage box 170. When the rider goes shopping, the rider takes the shopping basket 175 out of the storage box 170, and takes off and stores the helmet B1 in the storage box 170. When the rider is to drive the motorcycle 200 back home after the shopping, the rider takes the helmet B1 out of the storage box 170 and wears the helmet B1. Then, the rider stores the shopping basket 175 containing purchased commodities in the storage box 170, and drives the motorcycle back home. Upon arriving home, the rider takes the shopping basket 175 out of the storage box 170, and takes off and stores the helmet B1 in the storage box 170.

In this embodiment, the storage box 170 is utilized as a shopping basket accommodating space. Therefore, the motorcycle of this embodiment is convenient for shopping. After the purchased commodities are removed from the shopping basket 175, the empty shopping basket 175 is stored in the storage box 170. This requires no storage space for storing the shopping basket at home.

### Third Embodiment

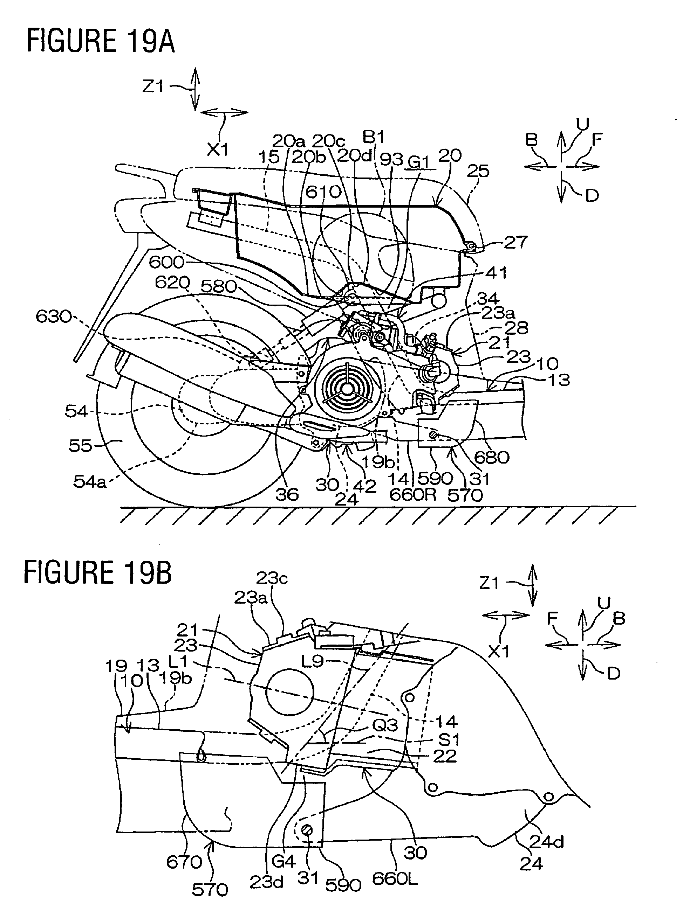

A third embodiment of the present invention will hereinafter be described with reference to Figs. 19 (A) and 19(B). The third embodiment has substantially the same construction as the first embodiment, except that the bracket unit 65 is not provided for the connection between the engine unit 30 and the vehicle body frame 10. Therefore, like components will be denoted by like reference numerals, and duplicate description on the construction, the functions and the effects will be omitted.

A rear suspension device 570 includes a stretchable rear shock absorber 580, and a connection mechanism 590. An upper end of the rear shock absorber 580 is connected to a connection member 610 provided on the left rear frame 14 via a fixture bolt 600. A lower end of the rear shock absorber 580 is connected to a connection member 630 provided on the housing 54a of the power transmission member 54 via a fixture bolt 620.

The connection mechanism 590 includes a left connection plate 670, a right connection plate 680, a pivot shaft 31 extending transversely (Y1) to the vehicle and supported by the connection plates 670, 680, and a pair of left and right connection portions 660L, 660R respectively connected to the connection plates 670, 680 via the pivot shaft 31 and provided integrally with the crank case 24.

The left connection plate 670 is fixed to the left side frame 13. The left connection plate 670 is formed of a metal plate, and is disposed below the rear end portion of the left side frame 13.

The right connection plate 680 is fixed to the right side frame 13. The right connection plate 680 is formed of a metal plate, and is disposed below the rear end portion of the right side frame 13.

The connection portions 660L, 660R are provided integrally with the front end portion of the crank case 24. The connection portions 660L, 660R are spaced from each other transversely (Y1) to the vehicle. The left connection portion 660L and the right connection portion 660R are generally symmetrical transversely (Y1) to the vehicle. The connection portions 660L, 660R are pivotable about the pivot shaft 31 with respect to the connection plates 670, 680.

The connection portions 660L, 660R are held between the connection plates 670 and 680 transversely (Y1) to the vehicle. The pivot shaft 31 extends through the connection portions 660L, 660R and the connection plates 670, 680. The pivot shaft 31 is attached to the connection portions 660L, 660R and the connection plates 670, 680 in an undroppable manner by means of nuts not shown.

The pivot shaft 31 and the connection portions 660L, 660R are parts of the connection mechanism 590 and the engine unit 30.

### Other Embodiments

It should be understood that the present invention be not limited to the embodiments described above with reference to the attached drawings. For example, the following embodiments also fall within the technical scope of the present invention.
(1) The tubular member of the throttle body may be disposed horizontally, or may be inclined in a downward direction toward the rear of the vehicle.
(2) The first throttle valve and the second throttle valve may be opposed to the upper surface of the cylinder block and the upper surface of the cylinder head, respectively. Alternatively, the first and second throttle valves may be both opposed to the upper surface of the cylinder block. Further, the first and second throttle valves may be both opposed to the upper surface of the crank case.
(3) The tubular member of the throttle body may be entirely disposed above the second phantom line extending in a forward direction from the uppermost end of the crank case into contact with the upper surface of the cylinder head. Alternatively, the tubular member of the throttle body may be entirely disposed below the second phantom line.
(4) The pivot shaft may be disposed at a higher position than an uppermost portion of the lower surface of the engine body.
(5) The pivot shaft may be disposed in a forward direction of the front end of the engine unit.
(6) The pivot shaft is merely required to be disposed below the cylinder axis of the cylinder block and in a forward direction with respect to the crank case. Therefore, the position of the pivot axis is not limited to that described above.
(7) The cylinder axis of the engine body may be inclined in a downward direction toward the front of the vehicle or may be parallel to the vehicle direction between the front and the rear.
(8) The lower surface of the storage box may be generally flat rather than recessed.
(9) The first throttle valve and the second throttle valve may be separately accommodated in different tubular members.
(10) The auxiliary air intake passage defining member may be configured in a different manner than those of the aforementioned embodiments, as long as it defines the auxiliary air intake passage connecting the portion between the first throttle valve and the second throttle valve to the injection space defined in the cylinder head. For example, the third boss may be obviated, and the downstream end of the hose may be fitted around the fourth boss. Alternatively, the fourth boss may be obviated, and the first boss may be formed with a recess, in which the third boss is fitted to be fixed. Further, the third boss and the fourth boss may be obviated, and the downstream end of the hose may be fixed directly to the first boss. Further, the tubular member of the throttle body may be formed with a recess, in which the upstream end of the hose is fixed.

### REFERENCE NUMERALS

10...vehicle body frame
13...side frame (foot rest plate support)
18...front wheel
18a...center axis of front wheel (center)
19...foot rest plate
20...storage box
20b...lower surface of storage box
20c...recess
21...engine body
22...cylinder block
22b...lower level surface portion
23...cylinder head
23a...front end portion of cylinder head (front end portion of engine body)
23c...upper surface of cylinder head
23d...lower surface of cylinder head (lower surface of engine body)
24...crank case
24c...higher level surface portion
24d... rear end portion of crank case (rear end portion of engine body)
25...seat
30...engine unit
31...pivot shaft
34...injector (fuel injection device)
35...injection nozzle
36...air intake pipe
38...throttle body
39a...front end portion (front end portion of connection pipe)
40A,40B...first and second throttle valves
41...auxiliary air intake passage defining member
45...crank shaft
51a...uppermost end (uppermost end of the crank case)
55...rear wheel
55a...center axis of rear wheel (center)
92a...uppermost end (uppermost end of engine unit)
93...opposed region
200...motorcycle
208...piston
220...tubular member
221...air intake port
A1...combustion chamber
C1...intake air flow direction
G1...lower space
G3...an injection space (space adjacent to injection nozzle)
J3...center axis of first rotation shaft (pivot center of first throttle valve)
J1...center axis of second rotation shaft (pivot center of second throttle valve)
K1...auxiliary air intake passage
L1...cylinder axis
L3...second phantom line segment
L4...second phantom line
L8...center axis of pivot shaft
L9...first phantom line segment
L20...first phantom line
P1...main air intake passage
X1 ... direction between the front and the rear of vehicle (first direction)
Z1...vertical direction of vehicle (first direction)

## Claims

1. A motorcycle comprising:
a vehicle body frame (10);
a front wheel (18) and a rear wheel (55) supported by the vehicle body frame (10) where a first direction (X1) is defined as being parallel to a phantom line (L20) extending through a center of the front wheel (18) and a center of the rear wheel (55) with the vehicle seen from a lateral side thereof;
a seat (25) supported by the vehicle body frame (10);
a storage box (20) disposed in a lower space present below the seat (25); and
an engine unit (30) disposed below the storage box (20) in the lower space and supported by the vehicle body frame (10) so as to be vertically pivotable together with the rear wheel (55);
the engine unit (30) including:
an engine body (21) including a crank case (24) accommodating a crank shaft (45), a cylinder block (22) connected to the crank case (24) and accommodating a piston (208) that is reciprocally movable along a cylinder axis (L1) extending in a forward direction from the crank case (24), and a cylinder head (23) that is cooperative with the cylinder block (22) to define a combustion chamber (A1) and includes an air intake port (221) defining a part of a main air intake passage (P1) connected to the combustion chamber (A1) ;
an air intake pipe (36) extending from the rear to the front of the vehicle wherein the air intake pipe (36) is connected to the cylinder head (23) and cooperative with the cylinder head (23) to define the main air intake passage (P1);
a pivot shaft (31) disposed at a lower position than the cylinder axis (L1) of the cylinder block (22) and in front of the crank case (24) and serving as a pivot center about which the engine unit (30) is pivotable with respect to the vehicle body frame (10);
a fuel injection device (35) attached to the cylinder head (23) and having an injection nozzle (35) arranged for injecting fuel into the part of the main air intake passage (P1) defined in the cylinder head (23); and
a throttle body (38) including a first throttle valve (40A),
**characterized in that**
the throttle body further comprises a second throttle valve (40B), the first throttle valve (40A) and the second throttle valve (40B) being spaced from each other in an intake air flow direction (C1) in the air intake pipe (36) wherein the first throttle valve (40A) is arranged downstream of the second throttle valve (40B) with respect to the intake air flow direction (C1), and a tubular member (220) that defines a part of the air intake pipe (36) and accommodates the first and second throttle valves (40A, 40B), the throttle body (38) being disposed above the engine body (21) at a position such that, a first phantom line segment (L9) extending between a rotation center axis of the first throttle valve (40A) and a center axis of the pivot shaft (31) has a greater inclination with respect to the first direction (X1) than a second phantom line segment (L2) extending between the rotation center axis of the first throttle valve (40A) and a rotation center axis of the second throttle valve (40B); and
the motorcycle further comprises an auxiliary air intake passage defining member (41) that defines an auxiliary air intake passage (K1) branched from the main air intake passage (P1) between the first and second throttle valves (40A, 40B) to guide intake air into a space adjacent to the injection nozzle (35) at least during idling.

2. A motorcycle as set forth in claim 1, wherein
the air intake pipe (36) is inclined downwardly towards the front of the motorcycle, and
the first throttle valve (40A) is located in a forward direction with respect to the second throttle valve (40B) at a lower position than the second throttle valve (40B).

3. A motorcycle as set forth in claim 2, wherein
a second direction is defined as being perpendicular to the first direction (X1) with the vehicle seen from the lateral side, and
the second phantom line segment (L2) has a first dimension as measured in the first direction (X1) and a second dimension as measured in the second direction, the first dimension being greater than the second dimension.

4. A motorcycle as set forth in claim 1, wherein
the first and second throttle valves (40A, 40B) at least partly overlap each other as seen in the first direction (X1) when the main air intake passage (P1) is closed by the first and second throttle valves (40A, 40B).

5. A motorcycle as set forth in claim 2, wherein
the engine body (21) has an upper surface (23c) including a higher level surface portion (24c) and a lower level surface portion (22b) adjoining each other in the first direction (X1), and
the second throttle valve (40B) and the first throttle valve (40A) are disposed above the higher level surface portion (24c) and the lower level surface portion (22b), respectively, with the vehicle seen from the lateral side.

6. A motorcycle as set forth in claim 1, wherein
the crank case (24) is disposed in a rear portion of the engine body (21), and the cylinder head (23) is disposed in a front portion of the engine body (21),
the crank case (24) has an uppermost end (92a), which is located at a higher position than an upper surface (23c) of the cylinder head (23), and
the tubular member (220) is at least partly disposed below a second phantom line (L4) extending in a forward direction from the uppermost end (92a) into contact with the upper surface (23c) of the cylinder head (23) as seen from the lateral side of the vehicle.

7. A motorcycle as set forth in claim 1, wherein
the pivot shaft (31) is disposed at a lower position than a lower surface (23d) of the engine body (21).

8. A motorcycle as set forth in claim 1, wherein
a second direction is defined as being perpendicular to the first direction (X1) with the vehicle seen from the lateral side, and
the pivot shaft (31) overlaps a front end portion (23a) of the engine body (21) in the second direction.

9. A motorcycle as set forth in claim 1, further comprising a foot rest plate (19) disposed in front of the seat (25), wherein
the vehicle body frame (10) includes a foot rest plate support which supports the foot rest plate (19), and
the pivot shaft (31) is disposed below the foot rest plate support.

10. A motorcycle as set forth in claim 1, wherein
a positional relationship between the pivot shaft (31) and the engine unit (30) with respect to the first direction (X1) is such that the pivot shaft (31) is disposed between a front end of the engine unit (30) and the crank case (24).

11. A motorcycle as set forth in claim 1, wherein
the cylinder axis (L1) is inclined upwardly towards the front of the motorcycle, and
the pivot shaft (31) is disposed at a lower position than a lower surface (23d) of the engine body (21), and is adjacent to a front end (23a) of the engine body (21) with the vehicle seen from the lateral side.

12. A motorcycle as set forth in claim 1, wherein
the cylinder axis (L1) is inclined upwardly towards the front of the motorcycle, and
the pivot shaft (31) is disposed at a lower position than a lower surface (23d) of the engine body (21) and in front of the tubular member (220).

13. A motorcycle as set forth in claim 1, wherein
the storage box (20) has a lower surface (20b) having an opposite region opposed to an uppermost portion of the engine unit (30), and
the storage box (20) has an upwardly recessed portion provided in the opposed region of the lower surface (20b) thereof.

14. A motorcycle as set forth in claim 1, wherein
a front end portion of the air intake pipe (36) is curved in a downward direction and connected to an upper surface (23c) of the cylinder head (23) in which the air intake port (221) opens, and
the fuel injection device (35) is disposed at a different position from the air intake port (221) in the cylinder head (23).

## Patentansprüche

1. Ein Motorrad, das folgende Merkmale aufweist:
einen Fahrzeugkarosserierahmen (10);
ein Vorderrad (18) und ein Hinterrad (55), die durch den Fahrzeugkarosserierahmen (10) getragen werden, wobei eine erste Richtung (X1) als parallel zu einer Phantomlinie (L20) definiert ist, die sich durch eine Mitte des Vorderrads (18) und eine Mitte des Hinterrads (55) erstreckt, wenn das Fahrzeug von einer lateralen Seite desselben betrachtet wird;
einen Sitz (25), der durch den Fahrzeugkarosserierahmen (10) getragen wird;
einen Aufbewahrungskasten (20), der in einem unter dem Sitz (25) vorhandenen unteren Raum angeordnet ist; und
eine Motoreinheit (30), die unter dem Aufbewahrungskasten (20) in dem unteren Raum angeordnet ist und durch den Fahrzeugkarosserierahmen (10) getragen wird, um zusammen mit dem Hinterrad (55) vertikal schwenkbar zu sein;
wobei die Motoreinheit (30) folgende Merkmale umfasst:
einen Motorkörper (21), der ein Kurbelgehäuse (24), das eine Kurbelwelle (45) beherbergt, einen Zylinderblock (22), der mit dem Kurbelgehäuse (24) verbunden ist und einen Kolben (208) beherbergt, der entlang einer Zylinderachse (L1), die sich in einer Vorwärtsrichtung von dem Kurbelgehäuse aus (24) erstreckt, hin- und her bewegbar ist, und einen Zylinderkopf (23), der mit dem Zylinderblock (22) zusammenwirkt, um eine Verbrennungskammer (A1) zu definieren, und eine Lufteintrittsöffnung (221) umfasst, die einen Teil eines Hauptlufteintrittsdurchgangs (P1), der mit der Verbrennungskammer (A1) verbunden ist, definiert, umfasst;
ein Lufteintrittsrohr (36), das sich von dem hinteren Teil zu dem vorderen Teil des Fahrzeugs erstreckt, wobei das Lufteintrittsrohr (36) mit dem Zylinderkopf (23) verbunden ist und mit dem Zylinderkopf (23) zusammenwirkt, um den Hauptlufteintrittsdurchgang (P1) zu definieren;
eine Schwenkwelle (31), die in einer weiter unten gelegenen Position ist als die Zylinderachse (L1) des Zylinderblocks (22) und vor dem Kurbelgehäuse (24) angeordnet ist und als Schwenkmitte dient, um die die Motoreinheit (30) bezüglich des Fahrzeugkarosserierahmens (10) schwenkbar ist;
eine Treibstoffeinspritzvorrichtung (35), die an dem Zylinderkopf (23) angebracht ist und eine Einspritzdüse (35) aufweist, die dazu angeordnet ist, Treibstoff in den Teil des Hauptlufteintrittsdurchgangs (P1) einzuspritzen, der in dem Zylinderkopf (23) definiert ist; und
einen Drosselklappenstutzen (38), der ein erstes Drosselventil (40A) umfasst,
**dadurch gekennzeichnet, dass**
der Drosselklappenstutzen ferner ein zweites Drosselventil (40B) aufweist, wobei das erste Drosselventil (40A) und das zweite Drosselventil (40B) in einer Eintrittsluftströmungsrichtung (C1) in dem Lufteintrittsrohr (36) voneinander beabstandet sind, wobei das erste Drosselventil (40A) bezüglich der Eintrittsluftströmungsrichtung (C1) nach dem zweiten Drosselventil (40B) angeordnet ist, und ein röhrenförmiges Bauglied (220), das einen Teil des Lufteintrittsrohrs (36) definiert und das erste und das zweite Drosselventil (40A, 40B) beherbergt, wobei der Drosselklappenstutzen (38) über dem Motorkörper (21) in einer Position derart angeordnet ist, dass ein erstes Phantomliniensegment (L9), das sich zwischen einer Drehmittelachse des ersten Drosselventils (40A) und einer Mittelachse der Schwenkwelle (31) erstreckt,
bezüglich der ersten Richtung (X1) eine größere Neigung aufweist als ein zweites Phantomliniensegment (L2), das sich zwischen der Drehmittelachse des ersten Drosselventils (40A) und einer Drehmittelachse des zweiten Drosselventils (40B) erstreckt; und
das Motorrad ferner ein Nebenlufteintrittsdurchgangsdefinitionsbauglied (41) aufweist, das einen Nebenlufteintrittsdurchgang (K1) definiert, der von dem Hauptlufteintrittsdurchgang (P1) zwischen dem ersten und dem zweiten Drosselventil (40A, 40B) abgezweigt ist, um zumindest während des Leerlaufs Eintrittsluft in einen neben der Einspritzdüse (35) befindlichen Raum zu führen.

2. Ein Motorrad gemäß Anspruch 1, bei dem
das Lufteintrittsrohr (36) in Richtung des vorderen Teils des Motorrads nach unten geneigt ist, und
das erste Drosselventil (40A) in einer Vorwärtsrichtung bezüglich des zweiten Drosselventils (40B) in einer weiter unten gelegenen Position angeordnet ist als das zweite Drosselventil (40B).

3. Ein Motorrad gemäß Anspruch 2, bei dem
eine zweite Richtung als senkrecht zu der ersten Richtung (X1) definiert ist, wenn das Fahrzeug von der lateralen Seite betrachtet wird, und
das zweite Phantomliniensegment (L1) eine erste Abmessung, wie sie in der ersten Richtung (X1) gemessen ist, und eine zweite Abmessung, wie sie in der zweiten Richtung gemessen ist, aufweist, wobei die erste Abmessung größer ist als die zweite Abmessung.

4. Ein Motorrad gemäß Anspruch 1, bei dem
das erste und das zweite Drosselventil (40A, 40B) in der ersten Richtung (X1) betrachtet einander zumindest teilweise überlappen, wenn der Hauptlufteintrittsdurchgang (P1) durch das erste und das zweite Drosselventil (40A, 40B) geschlossen ist.

5. Ein Motorrad gemäß Anspruch 2, bei dem
der Motorkörper (21) eine obere Oberfläche (23c) aufweist, die einen Oberflächenabschnitt einer höheren Ebene (24c) und einen Oberflächenabschnitt einer niedrigeren Ebene (22b) umfasst, die in der ersten Richtung (X1) aneinander angrenzen, und
das zweite Drosselventil (40B) und das erste Drosselventil (40A) über dem Oberflächenabschnitt einer höheren Ebene (24c) beziehungsweise dem Oberflächenabschnitt einer niedrigeren Ebene (22b) angeordnet sind, wenn das Fahrzeug von der lateralen Seite betrachtet wird.

6. Ein Motorrad gemäß Anspruch 1, bei dem
das Kurbelgehäuse (24) in einem hinteren Abschnitt des Motorkörpers (21) angeordnet ist und der Zylinderkopf (23) in einem vorderen Abschnitt des Motorkörpers (21) angeordnet ist,
das Kurbelgehäuse (24) ein oberstes Ende (92a) aufweist, das sich in einer höheren Position befindet als eine obere Oberfläche (23c) des Zylinderkopfes (23), und
das röhrenförmige Bauglied (220) zumindest teilweise unter einer zweiten Phantomlinie (L4) angeordnet ist, die sich von dem obersten Ende (92a) aus in einer Vorwärtsrichtung erstreckt und dabei in Kontakt mit der oberen Oberfläche (23c) des Zylinderkopfes (23) gelangt, von der lateralen Seite des Fahrzeugs aus betrachtet.

7. Ein Motorrad gemäß Anspruch 1, bei dem
die Schwenkwelle (31) in einer weiter unten gelegenen Position angeordnet ist als eine untere Oberfläche (23d) des Motorkörpers (21).

8. Ein Motorrad gemäß Anspruch 1, bei dem
eine zweite Richtung als senkrecht zu der ersten Richtung (X1) definiert ist, wenn das Fahrzeug von der lateralen Seite betrachtet wird, und
die Schwenkwelle (31) einen Vorderendabschnitt (23a) des Motorkörpers (21) in der zweiten Richtung überlappt.

9. Ein Motorrad gemäß Anspruch 1, das ferner eine Fußstützenplatte (19) aufweist, die vor dem Sitz (25) angeordnet ist, wobei
der Fahrzeugkarosserierahmen (10) einen Fußstützenplattenträger umfasst, der die Fußstützenplatte (19) trägt, und
die Schwenkwelle (31) unter dem Fußstützenplattenträger angeordnet ist.

10. Ein Motorrad gemäß Anspruch 1, bei dem
eine Positionsbeziehung zwischen der Schwenkwelle (31) und der Motoreinheit (30) bezüglich der ersten Richtung (X1) dergestalt ist, dass die Schwenkwelle (31) zwischen einem Vorderende der Motoreinheit (30) und dem Kurbelgehäuse (24) angeordnet ist.

11. Ein Motorrad gemäß Anspruch 1, bei dem
die Zylinderachse (L1) zu dem vorderen Teil des Motorrads hin nach oben geneigt ist, und
die Schwenkwelle (31) in einer weiter unten gelegenen Position angeordnet ist als eine untere Oberfläche (23d) des Motorkörpers (21) und sich neben einem Vorderende (23a) des Motorkörpers (21) befindet, wenn das Fahrzeug von der lateralen Seite betrachtet wird.

12. Ein Motorrad gemäß Anspruch 1, bei dem
die Zylinderachse (L1) zu dem vorderen Teil des Motorrads hin nach oben geneigt ist, und
die Schwenkwelle (31) in einer weiter unten gelegenen Position als eine untere Oberfläche (23d) des Motorkörpers (21) und vor dem röhrenförmigen Bauglied (220) angeordnet ist.

13. Ein Motorrad gemäß Anspruch 1, bei dem
der Aufbewahrungskasten (20) eine untere Oberfläche (20b) aufweist, die eine gegenüberliegende Region aufweist, die einem obersten Abschnitt der Motoreinheit (30) gegenüberliegt, und
der Aufbewahrungskasten (20) einen nach oben ausgesparten Abschnitt aufweist, der in der gegenüberliegenden Region der unteren Oberfläche (20b) desselben vorgesehen ist.

14. Ein Motorrad gemäß Anspruch 1, bei dem
ein Vorderendabschnitt des Lufteintrittsrohrs (36) in einer nach unten verlaufenden Richtung gekrümmt ist und mit einer oberen Oberfläche (23c) des Zylinderkopfes (23), in der sich die Lufteintrittsöffnung (221) öffnet, verbunden ist, und
die Treibstoffeinspritzvorrichtung (35) in dem Zylinderkopf (23) in einer anderen Position angeordnet ist als die Lufteintrittsöffnung (221).

## Revendications

1. Motocyclette comprenant:
un châssis de carrosserie de véhicule (10);
une roue avant (18) et une roue arrière (55) supportées par le châssis de carrosserie de véhicule (10), où une première direction (X1) est définie comme étant parallèle à une ligne imaginaire (L20) s'étendant à travers un centre de la roue avant (18) et un centre de la roue arrière (55) lorsque le véhicule est vu d'un côté latéral de celui-ci;
un siège (25) supporté par le châssis de carrosserie de véhicule (10);
une boîte de rangement (20) disposée dans un espace inférieur présent au-dessous du siège (25), et
une unité de moteur (30) disposée au-dessous de la boîte de rangement (20) dans l'espace inférieur et supportée par le châssis de carrosserie de véhicule (10) de manière à pouvoir pivoter verticalement ensemble avec la roue arrière (55);
l'unité de moteur (30) comportant :
un corps de moteur (21) comportant un carter de vilebrequin (24) abritant un vilebrequin (45), un bloc-cylindres (22) relié au carter de vilebrequin (24) et abritant un piston (208) qui est déplaçable en va-et-vient le long d'un axe de cylindre (L1) s'étendant dans une direction vers l'avant à partir du carter de vilebrequin (24), et une tête de cylindre (23) qui coopère avec le bloc-cylindres (22) pour définir une chambre de combustion (A1) et comporte un orifice d'entrée d'air (221) définissant une partie d'un passage d'admission d'air principal (P1) connecté à la chambre de combustion (A1);
un tuyau d'admission d'air (36) s'étendant de l'arrière vers l'avant du véhicule, où le tuyau d'admission d'air (36) est connecté à la tête de cylindre (23) et coopère avec la tête de cylindre (23) pour définir le passage d'admission d'air principal (P1);
un arbre de pivotement (31) disposé à une position plus basse que l'axe de cylindre (L1) du bloc-cylindres (22) et en face du carter de vilebrequin (24) et servant de centre de pivotement autour duquel l'unité de moteur (30) peut pivoter par rapport au châssis de carrosserie de véhicule (10);
un dispositif d'injection de carburant (35) fixé à la tête de cylindre (23) et présentant une buse d'injection (35) aménagée pour injecter du carburant dans la partie du passage d'admission d'air principal (P1) défini dans la tête de cylindre (23), et
un corps d'étranglement (38) comportant une première soupape d'étranglement (40A),
**caractérisée par le fait que**
le corps d'étranglement comprend par ailleurs une deuxième soupape d'étranglement (40B), la première soupape d'étranglement (40A) et la deuxième soupape d'étranglement (40B) étant espacées l'une de l'autre dans une direction de circulation d'air d'admission (C1) dans le tuyau d'admission d'air (36), où la première soupape d'étranglement (40A) est disposée en aval de la deuxième soupape d'étranglement (40B) par rapport à la direction de circulation d'air d'admission (Cl), et un élément tubulaire (220) qui définit une partie du tuyau d'admission d'air (36) et qui reçoit les première et deuxième soupapes d'étranglement (40A, 40B), le corps d'étranglement (38) étant disposé au-dessus du corps de moteur (21) à une position telle qu'un premier segment de ligne imaginaire (L9) s'étendant entre un axe central de rotation de la première soupape d'étranglement (40A) et un axe central de l'arbre de pivotement (31) présente une plus grande inclinaison par rapport à la première direction (X1) qu'un deuxième segment de ligne imaginaire (L2) s'étendant entre l'axe central de rotation de la première soupape d'étranglement (40A) et un axe central de rotation de la deuxième soupape d'étranglement (40B), et
la motocyclette comprend par ailleurs un élément définissant un passage d'admission d'air auxiliaire (41) qui définit un passage d'admission d'air auxiliaire (K1) ramifiée à partir du passage d'admission d'air principal (P1) entre les première et deuxième soupape d'étranglement (40A, 40B) pour guider l'air d'entrée vers un espace adjacent à la buse d'injection (35) au moins pendant la marche au ralenti.

2. Motocyclette selon la revendication 1, dans laquelle
le tuyau d'admission d'air (36) est incliné vers le bas vers l'avant de la motocyclette, et
la première soupape d'étranglement (40A) est située dans une direction vers l'avant par rapport à la deuxième soupape d'étranglement (40B), à une position plus basse que la deuxième soupape d'étranglement (40B).

3. Motocyclette selon la revendication 2, dans laquelle
une deuxième direction est définie comme étant perpendiculaire à la première direction (X1), lorsque le véhicule est vu du côté latéral, et
le deuxième segment de ligne imaginaire (L2) présente une première dimension mesurée dans la première direction (X1) et une deuxième dimension mesurée dans la deuxième direction, la première dimension étant supérieure à la deuxième dimension.

4. Motocyclette selon la revendication 1, dans laquelle
les première et deuxième soupapes d'étranglement (40A, 40B) se chevauchent au moins partiellement, vu dans la première direction (X1) lorsque le passage d'admission d'air principal (P1) est fermé par les première et deuxième soupapes d'étranglement (40A, 40B).

5. Motocyclette selon la revendication 2, dans laquelle
le corps de moteur (21) présente une surface supérieure (23c) comportant une partie de surface de niveau supérieur (24c) et une partie de surface de niveau inférieur (22b) contigües l'une à l'autre dans la première direction (X1), et
la deuxième soupape d'étranglement (40B) et la première soupape d'étranglement (40A) sont disposées respectivement au-dessus de la partie de surface de niveau supérieur (24c) et de la partie de surface de niveau inférieur (22b), lorsque le véhicule est vu du côté latéral.

6. Motocyclette selon la revendication 1, dans laquelle
le carter de vilebrequin (24) est disposé dans une partie arrière du corps de moteur (21), et la tête de cylindre (23) est disposée dans une partie avant du corps de moteur (21),
le carter de vilebrequin (24) présente une extrémité supérieure (92a) qui est située à une position plus haute que la surface supérieure (23c) de la tête de cylindre (23), et
l'élément tubulaire (220) est au moins partiellement disposé au-dessous d'une deuxième ligne imaginaire (L4) s'étendant dans une direction vers l'avant à partir de l'extrémité supérieure (92a) en contact avec la surface supérieure (23c) de la tête de cylindre (23), tel que vu du côté latéral du véhicule.

7. Motocyclette selon la revendication 1, dans laquelle
l'arbre de pivotement (31) est disposé à une position plus basse qu'une surface inférieure (23d) du corps de moteur (21).

8. Motocyclette selon la revendication 1, dans laquelle
une deuxième direction est définie comme étant perpendiculaire à la première direction (X1), lorsque le véhicule est vu du côté latéral, et
l'arbre de pivotement (31) chevauche avec une partie d'extrémité avant (23a) du corps de moteur (21) dans la deuxième direction.

9. Motocyclette selon la revendication 1, comprenant par ailleurs une plaque repose-pied (19) disposée à l'avant du siège (25), dans laquelle
le châssis de carrosserie de véhicule (10) comprend un support de plaque repose-pied qui supporte la plaque repose-pied (19), et
l'arbre de pivotement (31) est disposé au-dessous du support de plaque repose-pied.

10. Motocyclette selon la revendication 1, dans laquelle
un rapport de position entre l'axe de pivotement (31) et l'unité de moteur (30) par rapport à la première direction (X1) est tel que l'axe de pivotement (31) soit disposé entre une extrémité avant de l'unité de moteur (30) et le carter de vilebrequin (24).

11. Motocyclette selon la revendication 1, dans laquelle
l'axe de cylindre (L1) est incliné vers le haut vers l'avant de la motocyclette, et
l'arbre de pivotement (31) est disposé à une position plus basse qu'une surface inférieure (23d) du corps de moteur (21), et est adjacent à une extrémité avant (23a) du corps de moteur (21), lorsque le véhicule est vu du côté latéral.

12. Motocyclette selon la revendication 1, dans laquelle
l'axe de cylindre (L1) est incliné vers le haut vers l'avant de la motocyclette, et
l'arbre de pivotement (31) est disposé à une position plus basse qu'une surface inférieure (23d) du corps de moteur (21) et en avant de l'élément tubulaire (220).

13. Motocyclette selon la revendication 1, dans laquelle
la boîte de rangement (20) présente une surface inférieure (20b) présentant une région opposée à une partie supérieure de l'unité de moteur (30), et
la boîte de rangement (20) comporte une partie en creux vers le haut prévue dans la région opposée de sa surface inférieure (20b).

14. Motocyclette selon la revendication 1, dans laquelle
une partie d'extrémité avant du tuyau d'admission d'air (36) est recourbée dans une direction vers le bas et reliée à une surface supérieure (23c) de la tête de cylindre (23) dans laquelle s'ouvre l'orifice d'admission d'air (221), et
le dispositif d'injection de carburant (35) est disposé à une position différente de l'orifice d'admission d'air (221) dans la tête de cylindre (23).
